# EUROPEAN PATENT APPLICATION

(11) **EP 4 844 566 A1**
(43) Date of publication of application: **25.11.2026**
(21) Application number: 26179292.3
(22) Date of filing: 18.05.2026
(51) Int. Cl.: G06F 3/12, G06F 21/30, G06F 21/57, G06F 21/74, H04L 9/40, H04W 12/50, H04W 84/12

(54) **INFORMATION PROCESSING APPARATUS, CONTROL METHOD, AND PROGRAM**

(30) Priority: 22.05.2025 JP 2025085923
(71) Applicant: Canon Kabushiki Kaisha, Tokyo 146-8501 (JP)
(72) Inventor: TAKEUCHI, Takuya, Tokyo, 146-8501 (JP)
(74) Representative: Canon Europe Limited

(57) **Abstract**

A program causes a computer of an information processing apparatus configured to communicate with a communication apparatus configured to operate in a predetermined mode that is enabled in a case where an administrator password is input by a user to execute a process comprising: acquiring, as a first acquisition, first information via a predetermined connection between the communication apparatus and the information processing apparatus, the first information being information indicating an operation mode of the communication apparatus; and executing, as a first execution, a first process to perform control so that in a case where the first information acquired via the predetermined connection indicates that the communication apparatus is in the predetermined mode, network setting information about the communication apparatus is transmitted to the communication apparatus via the predetermined connection.

## Description

### TECHNICAL FIELD

The present disclosure relates to an information processing apparatus, a control method, and a program.

### BACKGROUND

A method is known in which an information processing apparatus, such as a smartphone, transmits information for establishing a connection to an access point to a communication apparatus, such as a printer, and the communication apparatus establishes a connection to the access point using the information. Japanese Patent Laid-Open No. 2006-050587 describes a configuration in which an information processing apparatus transmits information for establishing a connection to an access point to a communication apparatus via a universal serial bus (USB) cable and the communication apparatus establishes a connection to the access point using the information.

Meanwhile, as configurations in which information for establishing a connection to an access point is transmitted to a communication apparatus have become widespread, there has been a need to improve the usability of an application program that performs a process for transmitting information for establishing a connection to an access point to a communication apparatus.

### SUMMARY

The present disclosure is directed to improving the usability of an application program that performs a process for transmitting information for establishing a connection to an access point and network setting information, such as Internet Protocol (IP) address setting information, to a communication apparatus.

The present disclosure in its first aspect provides a program, which is a predetermined application program, for causing a computer of an information processing apparatus configured to communicate with a communication apparatus configured to operate in a predetermined mode that is enabled in a case where an administrator password is input by a user to execute a process comprising: acquiring, as a first acquisition, first information via a predetermined connection between the communication apparatus and the information processing apparatus, the first information being information indicating an operation mode of the communication apparatus; and executing, as a first execution, a first process to perform control so that in a case where the first information acquired via the predetermined connection indicates that the communication apparatus is in the predetermined mode, network setting information about the communication apparatus is transmitted to the communication apparatus via the predetermined connection .

The present disclosure in its second aspect provides a control method for controlling an information processing apparatus, the method including a predetermined application and configured to communicate with a communication apparatus configured to operate in a predetermined mode that is enabled in a case where an administrator password is input by a user, the method comprising: acquiring, as a first acquisition, first information via a predetermined connection between the communication apparatus and the information processing apparatus, the first information being information indicating an operation mode of the communication apparatus; and executing, as a first execution, a first process to perform control so that in a case where the first information acquired via the predetermined connection indicates that the communication apparatus is in the predetermined mode, network setting information about the communication apparatus is transmitted to the communication apparatus via the predetermined connection.

The present disclosure in its third aspect provides an information processing apparatus including a predetermined application and configured to communicate with a communication apparatus configured to operate in a predetermined mode that is enabled in a case where an administrator password is input by a user, the information processing apparatus comprising: a first acquisition means for acquiring first information via a predetermined connection between the communication apparatus and the information processing apparatus, the first information being information indicating an operation mode of the communication apparatus; and a first execution means for executing a first process to perform control so that in a case where the first information acquired via the predetermined connection indicates that the communication apparatus is in the predetermined mode, network setting information about the communication apparatus is transmitted to the communication apparatus via the predetermined connection.

Optional features are now described. Each optional feature may be applied to any of the above aspects and may be combined in any suitable form.

In embodiments, the program may further cause the computer to execute a second process for controlling execution of a first process, such that when information indicating that a communication apparatus is operating in a predetermined mode is not acquired, execution of the first process is suppressed.

In further embodiments, the second process may include control for displaying a notification screen configured to provide a notification prompting operation of the communication apparatus in the predetermined mode.

In embodiments, the notification screen may be configured to include at least one of text prompting a user to change the communication apparatus to the predetermined mode and text prompting the user to refer to a manual describing how to change the communication apparatus to the predetermined mode.

The first process may include displaying a network setting screen for receiving user input relating to network setting information. Optionally, the second process may include control for preventing display of the network setting screen when the communication apparatus is not in the predetermined mode.

The network setting information may include at least one of a service set identifier (SSID) of an external access point and a password for the external access point. Optionally, the external access point may be external to both the information processing apparatus and the communication apparatus.

In embodiments, the program may further cause the computer to execute a third process such that, when a connection different from a predetermined connection is used to establish communication between the communication apparatus and the information processing apparatus, network setting information for the communication apparatus is transmitted by an application program different from a predetermined application program.

Optionally, the predetermined connection may be a connection via a USB cable.

The other connection may be a wired LAN or a wireless LAN.

In the third process, the other application program may be configured to display a remote user interface corresponding to the communication apparatus.

Optionally, in the third process, the network setting information may be set on the communication apparatus in response to user operations performed on the remote user interface.

The predetermined mode may be a mode in which an access point internal to the communication apparatus is enabled in response to a predetermined user operation performed on the communication apparatus.

In embodiments, the predetermined connection may be a connection via a USB cable.

In embodiments, the predetermined connection may be a connection based on Bluetooth^{®} Low Energy.

In embodiments, the program may further cause the computer to acquire second information indicating whether an administrator password can be input for the communication apparatus connected via the predetermined connection. The program may further cause the computer to execute the first process even when the communication apparatus is not in the predetermined mode if the acquired second information indicates that administrator password input is not available.

In embodiments, the program may further cause the computer to control transmission of at least one of a print job for causing the communication apparatus to perform printing and a scan job for causing the communication apparatus to perform scanning.

According to the present disclosure, it will be understood that the communication apparatus may relate to any apparatus (e.g., an electronic apparatus) which is capable of communication (e.g., wireless communication) with the information processing apparatus.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating an example of a communication system.
Fig. 2 is a diagram illustrating examples of configurations of a terminal apparatus and a communication apparatus.

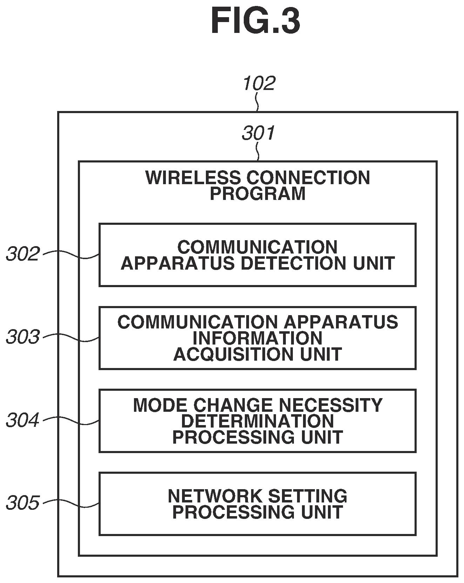

Fig. 3 is a diagram illustrating an example of a software configuration of a predetermined application.
Fig. 4 is a flowchart illustrating an example of a process performed by the terminal apparatus using the predetermined application.
Figs. 5A to 5G each illustrate an example of a communication apparatus list screen.
Fig. 6 is a flowchart illustrating an example of a process performed by the terminal apparatus using a predetermined application.
Fig. 7 illustrates an example of a network setting screen.
Fig. 8 illustrates an example of a screen providing guidance for changing to a connection setting mode.
Fig. 9 illustrates an example of a table related to the display control of buttons included in a communication list.
Fig. 10 illustrates an example of a remote user interface (remote UI) screen.
Fig. 11 illustrates an example of a remote user interface (remote UI) screen.
Figs. 12A and 12B each illustrate an example of a remote UI screen.
Fig. 13 illustrates a screen for selecting a connection method.
Fig. 14 illustrates an example of a network setting screen.
Figs. 15A to 15F each illustrate an example of a communication apparatus list screen.

### DESCRIPTION OF THE EMBODIMENTS

### First Embodiment

An information processing apparatus and a communication apparatus included in a communication system according to a first embodiment will be described. The information processing apparatus may also be referred to as a terminal apparatus. While a smartphone is described as an example of the information processing apparatus in the present embodiment, this is not intended to be limiting. Various other information processing apparatuses such as a personal computer (PC), a tablet terminal, a personal digital assistant (PDA), or a digital camera are also applicable. Further, a printing apparatus is described as an example of the communication apparatus in the present embodiment. The printing apparatus may be an inkjet printing apparatus configured to print using ink or a laser beam printing apparatus configured to print using toner. Further, the printing apparatus may be a full-color printing apparatus capable of color printing or a monochrome printing apparatus capable of monochrome printing but not color printing. In the present embodiment, the communication apparatus is not limited to the printing apparatus, and any apparatus capable of performing wireless communication with the information processing apparatus is applicable as the communication apparatus. Examples of apparatuses applicable as the communication apparatus include a copying machine, a facsimile apparatus, a scanner, a smartphone, a PC, a tablet terminal, a PDA, a digital camera, a music reproduction device, a television, a smart-speaker, a robot vacuum cleaner, an automatic cooking appliance, and a refrigerator. Other examples include a multi-function peripheral including a plurality of functions, such as copy, fax, and print functions.

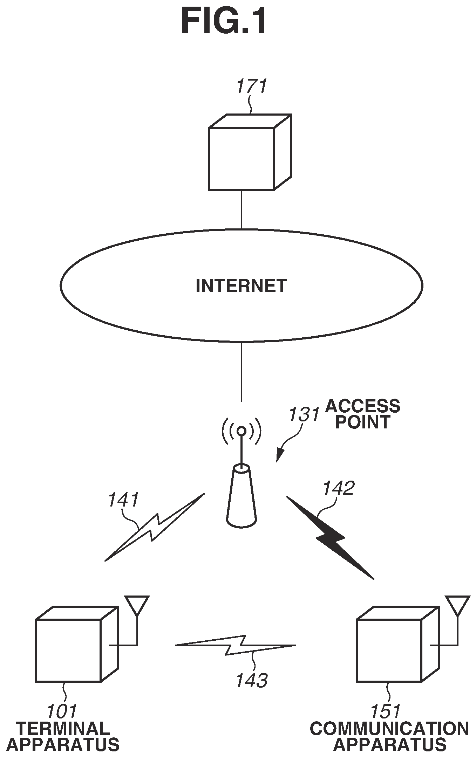

First, a system configuration configured to realize the present embodiment will be described. Fig. 1 is a diagram illustrating an example of a configuration of the communication system according to the present embodiment. The system includes a communication apparatus 151, a terminal apparatus 101, an access point (AP) 131, and an external server 171.

The terminal apparatus 101 is the information processing apparatus according to the present embodiment. The communication apparatus 151 is the communication apparatus according to the present embodiment. The AP 131 is an access point activated by an external apparatus external to the terminal apparatus 101 and the communication apparatus 151. Examples of the external apparatus include a wireless local area network (wireless LAN) router. The external server 171 is a server configured to provide a service to an apparatus connected to the AP 131 via the Internet.

In a situation where the communication apparatus 151 and the terminal apparatus 101 are connected to the AP 131, a local area network (LAN) established by the AP 131 includes the AP 131, the communication apparatus 151, and the terminal apparatus 101. On the other hand, a wide area network (WAN) includes the AP 131 and the external server 171.

In the present embodiment, in a case where an infrastructure connection, which will be described below, is established, the terminal apparatus 101 can communicate with the communication apparatus 151 via the AP 131. Furthermore, in a case where a direct connection, which will be described below, is established, the terminal apparatus 101 can directly communicate with the communication apparatus 151 without using the AP 131. Hereinafter, a connection to an AP corresponds to a connection to a network established by the AP. A single external apparatus may activate a plurality of APs, and a single external apparatus may be configured to establish a plurality of networks simultaneously.

In the present embodiment, a connection 141 between the terminal apparatus 101 and the AP 131 and a connection 142 between the communication apparatus 151 and the AP 131 are connections established using a communication method based on the Institute of Electrical and Electronics Engineers (IEEE) 802.11 standard. Specifically, the communication method based on the IEEE 802.11 standard refers to Wi-Fi^{®} (Wireless Fidelity). Further, a connection 143 between the terminal apparatus 101 and the communication apparatus 151 is also a connection established using a communication method based on the IEEE 802.11 standard. However, the communication method used for the connection 143 is not limited to that described above. For example, Bluetooth^{®} Low Energy, Bluetooth Classic, Wi-Fi Aware, Near Field Communication (NFC), or a universal serial bus (USB) cable may be used. The AP 131 and the external server 171 can communicate with each other via the Internet, and in a state where the AP 131 is connected to the Internet, apparatuses connected to the AP 131 (for example, the terminal apparatus 101 and the communication apparatus 151) can also use the Internet. The connection 141 between the terminal apparatus 101 and the AP 131 and the connection 142 between the communication apparatus 151 and the AP 131 may be connections established via a wired local area network (wired LAN).

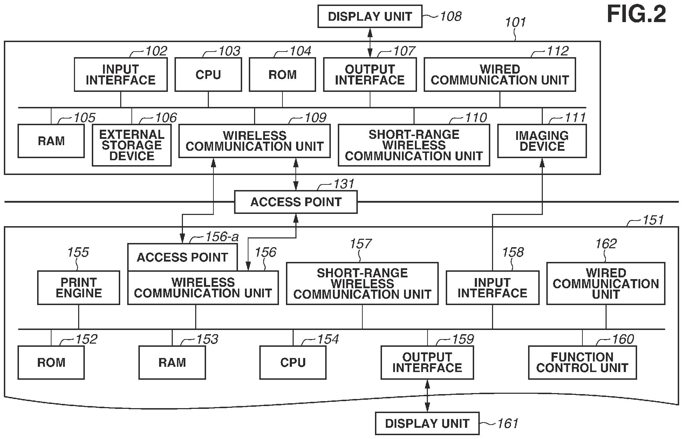

Next, a configuration of the information processing apparatus according to the present embodiment and a configuration of the communication apparatus capable of communicating with the information processing apparatus according to the present embodiment will be described with reference to a block diagram in Fig. 2. Further, while the following configurations are described as examples in the present embodiment, the present embodiment is applicable to any apparatus capable of communicating with the communication apparatus, and the functions are not particularly limited to those illustrated in Fig. 2.

The terminal apparatus 101 includes an input interface 102, a central processing unit (CPU) 103, a read-only memory (ROM) 104, a random access memory (RAM) 105, an external storage device 106, an output interface 107, a display unit 108, a wireless communication unit 109, a short-range wireless communication unit 110, an imaging device 111, a wired communication unit 112, and the like. The CPU 103, the ROM 104, the RAM 105, and the like constitute a computer of the terminal apparatus 101.

The input interface 102 is an interface configured to receive data input and an operation instruction from a user and includes a physical keyboard, a button, a touch panel, and the like. The output interface 107, which will be described below, and the input interface 102 may be implemented as a single component configured to perform screen output and receive an operation from the user.

The CPU 103 is a system control unit and controls the entire terminal apparatus 101. In the present embodiment, the CPU 103 performs control (display control) of the content displayed on the display unit 108 and the like.

The ROM 104 stores fixed data, such as a control program executed by the CPU 103, a data table, and an operating system (hereinafter, referred to as "OS") program. In the present embodiment, each control program stored in the ROM 104 performs software execution control, such as scheduling, task switching, and interrupt processing, under the control of an embedded OS stored in the ROM 104. In the present embodiment, the ROM 104 stores a predetermined application program (application) configured to control the communication apparatus 151. In other words, the application program is application software. For example, the predetermined application is installed on the terminal apparatus 101 from an external source via an application store for installing various applications. Further, the predetermined application is an application provided by a vendor of the communication apparatus 151 and configured to configure a network setting of the communication apparatus 151 connected to the terminal apparatus 101 via at least one of a wired local area network (hereinafter, "wired LAN"), a wireless local area network (hereinafter, "wireless LAN"), and a USB cable. The predetermined application may include another function other than a function that configures a connection setting of the communication apparatus 151. Specific examples of the other function include a function (print job transmission function) that transmits a print job configured to cause the communication apparatus 151 to print and a function (scan job transmission function) that transmits a scan job configured to cause the communication apparatus 151 to scan. A process described as being performed by the OS in the present embodiment is specifically a process performed by the CPU 103 according to a program in the OS. Similarly, a process described as being performed by the application is specifically a process performed by the CPU 103 according to a program in the application.

The RAM 105 includes a static RAM (SRAM) requiring a backup power supply, and the like. The RAM 105 retains data using a primary battery for data backup, which is not illustrated, thereby storing important data, such as a program control variable, without loss. Further, the RAM 105 also includes a memory area configured to store setting information of the terminal apparatus 101, management data of the terminal apparatus 101, and the like. Further, the RAM 105 is used as a main memory of the CPU 103 and as a work memory.

The external storage device 106 includes various programs, such as a print information generation program configured to generate print information interpretable by the communication apparatus 151 and an information transmission/reception control program configured to control transmission and reception of information to and from the communication apparatus 151 connected via the wireless communication unit 109. Further, the external storage device 106 also stores various types of information used by the programs and image data obtained from another information processing apparatus or the Internet.

The output interface 107 is an interface configured to perform control so that the display unit 108 displays data or provides a notification of a state of the terminal apparatus 101.

The display unit 108 includes a light-emitting diode (LED), a liquid crystal display (LCD), and the like and is configured to display data or provide a notification of a state of the terminal apparatus 101. A software keyboard including keys, such as a numeric value input key, a mode selection key, an enter key, a cancel key, and a power key, may be provided on the display unit 108 to receive input from the user via the display unit 108. In the present embodiment, the display unit 108 is a touch panel configured to receive an operation from the user via a finger, a stylus, or other input member.

The wireless communication unit 109 is configured to establish a wireless connection to an apparatus, such as the communication apparatus 151 or the AP 131, and perform data communication. For example, the wireless communication unit 109 may directly communicate with the communication apparatus 151 via wireless communication, or may communicate with the communication apparatus 151 via the AP 131 external to the terminal apparatus 101 and the communication apparatus 151. While a wireless communication method used by the wireless communication unit 109 in the present embodiment is Wi-Fi, which is a communication method based on the IEEE 802.11 standard, Bluetooth Classic or the like may be used. Further, in the present embodiment, the term "wireless LAN" refers to a Wi-Fi network. In the present embodiment, the term "direct connection" refers to a connection established using a method in which the terminal apparatus 101 and the communication apparatus 151 are directly connected without using an external AP. Further, the term "infrastructure connection" refers to a connection established using a method in which the terminal apparatus 101 and the communication apparatus 151 are connected via an external AP.

The short-range wireless communication unit 110 is configured to perform data communication with an apparatus, such as the communication apparatus 151, using a short-range wireless communication method, and performs communication using a communication method different from that used by the wireless communication unit 109. The short-range wireless communication unit 110 can connect to a short-range wireless communication unit 157 included in the communication apparatus 151. Examples of the communication method used by the short-range wireless communication unit 110 include Bluetooth Low Energy, Bluetooth Classic, Wi-Fi Aware, NFC, and the like.

The imaging device 111 is a device configured to convert an image captured by an image sensor into digital data.

The digital data is temporarily stored in the RAM 105. Then, a program executed by the CPU 103 converts the digital data into a predetermined image format, and the converted data is stored as image data in the external storage device 106.

The wired communication unit 112 is configured to establish a wired connection to an apparatus, such as the communication apparatus 151 or the AP 131, and perform data communication. For example, the wired communication unit 112 communicates via a wired LAN. In the present embodiment, communication over the wired LAN is performed in accordance with the Ethernet standard. This is not intended to be limiting, and the wired communication unit 112 may communicate, for example, via a USB cable. Further, for example, in a case where the terminal apparatus 101 is a smartphone, the terminal apparatus 101 may be provided without the wired communication unit 112.

The communication apparatus 151 includes a ROM 152, a RAM 153, a CPU 154, a print engine 155, a wireless communication unit 156, the short-range wireless communication unit 157, an input interface 158, an output interface 159, a function control unit 160, a display unit 161, a wired communication unit 162, and the like.

The ROM 152, the RAM 153, the CPU 154 and the like constitute a computer of the communication apparatus 151.

The wireless communication unit 156 is configured to establish a wireless connection to an apparatus, such as the terminal apparatus 101 or the AP 131, and perform data communication. While a wireless communication method used by the wireless communication unit 156 in the present embodiment is Wi-Fi, which is a communication method based on the IEEE 802.11 standard, Bluetooth Classic or the like may be used. The wireless communication unit 156 includes an AP 156-a as an internal AP of the communication apparatus 151 to establish a connection to an apparatus, such as the terminal apparatus 101. The AP can establish a connection to the wireless communication unit 109 of the terminal apparatus 101. The wireless communication unit 156 may directly communicate with the terminal apparatus 101 via the AP 156-a, or may communicate with the terminal apparatus 101 via the AP 131. Further, the AP 156-a may be hardware configured to function as an AP, or the wireless communication unit 156 may operate as the AP 156-a using software for functioning as an AP. Further, the communication apparatus 151 may be configured to internally activate a plurality of APs each having a different service set identifier (SSID) and password.

The RAM 153 includes a dynamic RAM (DRAM) requiring a backup power supply, and the like. The RAM 153 retains data using a power supply for data backup, which is not illustrated, thereby storing important data, such as a program control variable, without loss. Further, the RAM 153 is used as a main memory of the CPU 154 and as a work memory, and stores various types of information as a receive buffer configured to temporarily store print information received from the terminal apparatus 101 or the like.

The ROM 152 stores fixed data, such as a control program executed by the CPU 154, a data table, and an OS program. In the present embodiment, each control program stored in the ROM 152 performs software execution control, such as scheduling, task switching, and interrupt processing, under the control of an embedded OS stored in the ROM 152. Further, the ROM 152 also includes a memory area configured to store data that must be retained even in a case where no power is supplied, such as setting information of the communication apparatus 151 and management data of the communication apparatus 151.

The CPU 154 is a system control unit and controls the entire communication apparatus 151.

The print engine 155 is configured to form an image on a recording medium, such as paper, using a recording agent, such as ink, based on information stored in the RAM 153 or a print job received from the terminal apparatus 101 or the like and output a printed result. At this time, the print job received from the terminal apparatus 101 or the like is received via the wireless communication unit 156, which is capable of communicating at a higher speed than the short-range wireless communication unit 157, because the print job involves a large volume of data to be transmitted and requires high-speed communication.

The short-range wireless communication unit 157 is configured to communicate with an apparatus, such as the terminal apparatus 101, using a short-range wireless communication method. Examples of the communication method used by the short-range wireless communication unit 157 include Bluetooth Low Energy, Bluetooth Classic, Wi-Fi Aware, and the like.

The input interface 158 is an interface configured to receive data input and an operation instruction from the user and includes a physical keyboard, a button, a touch panel, and the like. The output interface 159, which will be described below, and the input interface 158 may be implemented as a single component configured to perform screen output and receive an operation from the user. The output interface 159 is an interface configured to perform control so that the display unit 161 displays data or provides a notification of a state of the communication apparatus 151.

The function control unit 160 performs function operation management to determine whether to perform functions of the communication apparatus 151 simultaneously.

The display unit 161 includes an LED, an LCD, and the like and is configured to display data or provide a notification of a state of the communication apparatus 151. A software keyboard including keys, such as a numeric value input key, a mode selection key, an enter key, a cancel key, and a power key, may be provided on the display unit 161 to receive input from the user via the display unit 161.

The wired communication unit 162 is configured to establish a wired connection to an apparatus, such as the terminal apparatus 101 or the AP 131, and perform data communication. For example, the wired communication unit 162 communicates via a wired LAN. This is not intended to be limiting, and the wired communication unit 162 may communicate, for example, via a USB cable.

### Direct Connection Method

The direct connection refers to a wireless connection established directly between apparatuses without using an external apparatus, such as the AP 131 (i.e., a peer-to-peer connection). The direct connection is also referred to as a peer-to-peer connection (P2P connection). The communication apparatus 151 is configured to operate in a mode (direct connection mode) for communicating via a direct connection, as a connection mode. In Wi-Fi communication, there is a plurality of modes for communicating via a direct connection, such as a software AP mode and a Wi-Fi Direct mode.

The Wi-Fi Direct mode refers to a mode in which Wi-Fi Direct is used to establish a direct connection. Wi-Fi Direct is a standard defined by the Wi-Fi Alliance and included in the IEEE 802.11 communication standards. In the Wi-Fi Direct mode, once a communication partner device is discovered using a device discovery command, the roles of a peer-to-peer (P2P) group owner (GO) and a P2P client are determined, and then the remaining wireless connection process is performed. The group owner corresponds to a Wi-Fi parent station (parent device), and the client corresponds to a Wi-Fi child station (child device). The role determination corresponds to, for example, P2P GO negotiation. In the Wi-Fi Direct mode in a state prior to the role determination, the communication apparatus 151 is neither a parent station nor a child station. Specifically, a device that intends to communicate first issues a device discovery command to discover another device available for connection in the Wi-Fi Direct mode. Once a communication partner device is discovered, the devices verify information about a service and/or function that can be provided by the devices. This device provision information verification is optional and not mandatory. This device provision information verification phase corresponds to, for example, P2P Provision Discovery. Next, each device verifies the device provision information about the other device, thereby determining which device plays the role of P2P client and which plays the role of P2P group owner. Next, once the client and the group owner are determined, the devices exchange parameters for performing Wi-Fi Direct communication. The P2P client and the P2P group owner perform the rest of the wireless connection process and an Internet Protocol (IP) connection process based on the exchanged parameters. In the Wi-Fi Direct mode, the communication apparatus 151 may operate as the GO without performing GO Negotiation described above. In other words, the communication apparatus 151 may operate in the Wi-Fi Direct mode as an Autonomous GO. Further, the state where the communication apparatus 151 operates in the Wi-Fi Direct mode refers to, for example, a state where no Wi-Fi Direct connection is established and the communication apparatus 151 operates as the GO or a state where a Wi-Fi Direct connection is established and the communication apparatus 151 operates as the GO.

In a software access point (software AP) mode, one (for example, the terminal apparatus 101) of the devices that intend to communicate (for example, the terminal apparatus 101 and the communication apparatus 151) plays the role of client and requests various services. Further, the other device realizes the AP functions in Wi-Fi by configuring software setting. A software AP corresponds to the Wi-Fi parent station, and the client corresponds to the Wi-Fi child station. In the software AP mode, the client issues a device discovery command to discover a device that operates as a software AP. Once a software AP is discovered, the client and the software AP perform the rest of the wireless connection process (such as establishing a wireless connection) and thereafter perform an IP connection process (such as assigning an IP address). Commands and parameters exchanged between the client and the software AP to establish a wireless connection may be those defined in the Wi-Fi standard, and a detailed description thereof is omitted herein.

In the present embodiment, in a case where the communication apparatus 151 has established and maintains a direct connection, the communication apparatus 151 operates as the parent station within a network to which the communication apparatus 151 belongs. The parent station refers to a device that establishes a wireless network and provides the child station with a parameter used to connect to the wireless network. The parameter used to connect to the wireless network refers to, for example, a parameter related to a channel used by the parent station. By receiving the parameter, the child station connects to the wireless network established by the parent station using the channel used by the parent station. In the direct connection mode, since the communication apparatus 151 operates as the parent station, the communication apparatus 151 can determine which frequency band and which channel are used for communication in the direct connection mode. In the present embodiment, the communication apparatus 151 can use a channel corresponding to the 2.4 GHz frequency band and a channel corresponding to the 5 GHz frequency band for communication in the direct connection mode.

### Infrastructure Connection Method

The infrastructure connection is a type of connection in which devices (such as the terminal apparatus 101 and the communication apparatus 151) that communicate with each other connect to an AP (such as the AP 131) that manages a network of the devices and the devices communicate with each other via the AP. The communication apparatus 151 is further operable in a mode (the infrastructure connection mode) for performing communication in the infrastructure connection, as one of the connection modes.

In the infrastructure connection, each device uses a device discovery command to discover an AP. Once an AP is discovered, the device and the AP perform the rest of the wireless connection process (such as establishing a wireless connection) and thereafter perform an IP connection process (such as assigning an IP address). Commands and parameters exchanged between the device and the AP to establish a wireless connection may be those defined in the Wi-Fi standard, and a detailed description thereof is omitted herein.

In the present embodiment, in a case where the communication apparatus 151 operates in the infrastructure connection, the AP 131 operates as the parent station, and the communication apparatus 151 operates as the child station. In other words, in the present embodiment, the infrastructure connection refers to a connection between the communication apparatus 151 operating as the child station and an apparatus operating as the parent station. In a case where the communication apparatus 151 has established the infrastructure connection and the terminal apparatus 101 has also established an infrastructure connection to the AP 131, the communication apparatus 151 and the terminal apparatus 101 can communicate with each other via the AP 131. A channel used for communication in the infrastructure connection is determined by the AP 131, and the communication apparatus 151 performs communication in the infrastructure connection using the channel determined by the AP 131. In the present embodiment, the communication apparatus 151 can use a channel corresponding to the 2.4 GHz frequency band and a channel corresponding to the 5 GHz frequency band for communication in the infrastructure connection. The communication apparatus 151 can also use a channel corresponding to the Dynamic Frequency Selection (DFS) range of the 5 GHz frequency band for communication in the infrastructure connection. In order to communicate with the communication apparatus 151 via the AP 131, the terminal apparatus 101 recognizes and identifies that the communication apparatus 151 belongs to the network that is established by the AP 131 and to which the terminal apparatus 101 belongs.

### Connection Setting Process

In the present embodiment, the terminal apparatus 101 performs connection setting (network setting), which is a setting for causing the communication apparatus 151 to operate using at least one of the infrastructure connection communication method and the direct connection communication method, using wireless communication with the communication apparatus 151. The connection setting process in the present embodiment is also referred to as cableless setup (CLS) because the connection setting process is performed using wireless communication. The connection setting process may be performed using wired communication. The terminal apparatus 101 performs the connection setting process on the communication apparatus 151 in a case where the predetermined application stored in the external storage device 106 or the like is activated. The communication apparatus 151 is operable in a connection setting mode (connection setting state), which is a mode for performing the connection setting process, and performs the connection setting process in a state where the communication apparatus 151 operates in the connection setting mode. Details of the connection setting mode will be described below.

In a case where the terminal apparatus 101 causes the communication apparatus 151 to operate in the infrastructure connection mode, the terminal apparatus 101 wirelessly transmits infrastructure setting information, which is setting information for causing the communication apparatus 151 to operate in the infrastructure connection mode, to the communication apparatus 151. The infrastructure setting information includes information about the AP 131. The information about the AP 131 refers to, for example, information about the SSID, password, encryption method, frequency band, and the like.

On the other hand, in a case where the terminal apparatus 101 causes the communication apparatus 151 to operate in the direct connection mode, the terminal apparatus 101 wirelessly transmits direct setting information, which is setting information for causing the communication apparatus 151 to operate in the direct connection mode, to the communication apparatus 151. The direct setting information includes an instruction to enable the Wi-Fi Direct function and cause the communication apparatus 151 to operate as the group owner or an instruction to enable an access point setting of the communication apparatus 151. Further, the terminal apparatus 101 acquires connection information necessary for establishing a direct connection to the communication apparatus 151 from the communication apparatus 151. The connection information necessary for establishing a direct connection to the communication apparatus 151 includes, for example, information about the SSID, password, and the like of the communication apparatus 151 that operates in the direct connection mode.

In the present embodiment, the direct connection for the connection setting or the USB cable connection between the terminal apparatus 101 and the communication apparatus 151 is used to transmit the infrastructure setting information or the direct setting information and to acquire the information for establishing a direct connection to the communication apparatus 151 in the connection setting process. While the connection setting process via Wi-Fi is performed as the direct connection for the connection setting in the present embodiment, a wireless communication standard other than Wi-Fi, such as Bluetooth, may be used. Further, a wired communication standard, such as wired LAN, may be used for the direct connection for the connection setting.

Once an infrastructure connection via Wi-Fi or a direct connection is established between the terminal apparatus 101 and the communication apparatus 151 by the connection setting process, the terminal apparatus 101 and the communication apparatus 151 can communicate with each other via the established connection. Specifically, for example, the terminal apparatus 101 can transmit a print job configured to cause the communication apparatus 151 to print or a scan job configured to cause the communication apparatus 151 to scan to the communication apparatus 151 via the established connection. While the connection setting process can cause the communication apparatus 151 to operate in the infrastructure connection mode or in the direct connection mode in the present embodiment, this is not intended to be limiting. For example, the connection setting process may be configured to cause the communication apparatus 151 to operate only in the infrastructure connection mode (in other words, the connection setting process cannot cause the communication apparatus 151 to operate in the direct connection mode).

### Connection Setting Mode

The communication apparatus 151 can operate in the connection setting mode. A trigger for causing the communication apparatus 151 to start operating in the connection setting mode may be, for example, a user pressing a connection setting mode button or may be the communication apparatus 151 being activated (powered on) for the first time after delivery. The connection setting mode button may be a hardware button of the communication apparatus 151 or a software button displayed on the display unit 161 by the communication apparatus 151. The connection setting mode is a mode in which the operation in the connection setting mode stops in a case where a predetermined time has passed since enablement of the connection setting mode.

Once the communication apparatus 151 starts operating in the connection setting mode, the communication apparatus 151 enables Wi-Fi communication. Specifically, as a process for enabling Wi-Fi communication, the communication apparatus 151 enables the internal AP (connection setting AP) of the communication apparatus 151 that is dedicated to the connection setting mode. Consequently, the communication apparatus 151 is in a state where the communication apparatus 151 can establish a direct connection to the terminal apparatus 101 via Wi-Fi. At least some of the connection information (SSID and password) for establishing a connection to the connection setting AP is stored in advance in the predetermined application installed on the terminal apparatus 101. In other words, the terminal apparatus 101 recognizes at least some of the connection information for establishing a connection to the connection setting AP in advance. Accordingly, unlike the connection information about the AP enabled in the direct connection mode, at least some of the connection information for establishing a connection to the connection setting AP cannot be arbitrarily changed by the user. The connection setting AP enabled upon starting operation in the connection setting mode is an AP disabled in a case where a predetermined time has passed since enablement of the AP.

An SSID of the connection setting AP, which is the connection information for establishing a connection to the connection setting AP, in the present embodiment will be described in detail. In the present embodiment, the SSID of the connection setting AP includes a character string common to a plurality of models, a character string common to a single model, and a unique character string. The character string common to a plurality of models refers to a character string common to a predetermined model provided by a predetermined vendor and another model provided by the predetermined vendor. Specifically, the character string common to a plurality of models refers to a character string that includes a character string indicating a vendor name. The character string indicating the vendor name is not limited to a character string consisting solely of the vendor name and may be any character string including the vendor name. Further, this is not intended to be limiting, and the character string may be, for example, a character string that does not include the character string indicating the vendor name but is assigned to each vendor. Further, the character string common to a single model refers to a character string that is common to a predetermined model provided by a predetermined vendor but is not common to the predetermined model provided by the predetermined vendor and another model provided by the predetermined vendor. Hereinafter, the character string common to a single model will be referred to as a common character string for each model. Specifically, the common character string for each model refers to a character string that includes a character string indicating a model name. The character string indicating the model name is not limited to a character string consisting solely of the model name and may be any character string including the model name. Further, this is not intended to be limiting, and the character string may be, for example, a character string that does not include the character string indicating the model name but is assigned to each model.

Further, the unique character string refers to a character string that is different for each communication apparatus. Specifically, the unique character string is a character string such as a serial number of the communication apparatus or a random character string that is different for each communication apparatus. However, this is not intended to be limiting, and the unique character string may be a character string including a character string that varies each time the connection setting mode is activated. Further, in the present embodiment, the SSID of the connection setting AP includes the character string common to a plurality of models, the unique character string, and the common character string for each model in this order. However, this is not intended to be limiting, and the character strings may be in any order. In the present disclosure, the SSID of the connection setting AP is not required to include all three types of character strings, namely the character string common to a plurality of models, the unique character string, and the common character string for each model. For example, a character string that includes two of the three types of character strings or a character string that is arbitrarily determined by the user may be employed.

The predetermined application stores at least some of the character strings of the SSID in advance and notifies the OS of at least some of the character strings of the SSID, whereby the OS performs a communication apparatus search. In the present embodiment, the character string stored in advance in the predetermined application is the character string indicating the vendor name. The character string indicating the vendor name is, in other words, at least some of the character strings forming the SSID and the character string common to a plurality of models. The character string stored in advance in the predetermined application is not limited to the character string common to a plurality of models and may be the common character string for each model or the unique character string. In the present disclosure, the predetermined application is not required to store at least some of the character strings of the SSID in advance. Specifically, the predetermined application may receive input of at least some of the character strings of the SSID from the user, recognize the input character string as entered, and notify the OS of the character string as entered.

No encryption method may be set for the connection setting AP and no password may be required to establish a connection to the AP. In the connection setting mode, the communication apparatus 151 may establish a connection to the terminal apparatus 101 via Wi-Fi Direct (Wi-Fi Direct) instead of standard Wi-Fi. In other words, the communication apparatus 151 may operate as the group owner and receive a setting command from the terminal apparatus 101 via Wi-Fi Direct communication. In the connection setting mode, the communication apparatus 151 may enable communication other than Wi-Fi communication, such as Bluetooth Low Energy communication. In other words, the communication apparatus 151 may perform the connection setting process using a communication method other than Wi-Fi. Further, the communication apparatus 151 may enable both Wi-Fi communication and communication other than Wi-Fi communication, such as Bluetooth Low Energy communication.

### Software Configuration of the Predetermined Application

Next, a software configuration of a wireless connection program that is the predetermined application in the present embodiment will be described. The software is installed as a wireless connection program 301 on the terminal apparatus 101. A communication apparatus detection unit 302 performs a process for detecting the communication apparatus 151 by discovering the communication apparatus 151 connected to the AP using at least one of the wired LAN and wireless LAN connection methods, discovering the communication apparatus 151 connected to the terminal apparatus 101 using the USB cable, and detecting a beacon of the communication apparatus 151 operating in the connection setting mode. A communication apparatus information acquisition means (e.g., unit) 303 acquires, from the detected communication apparatus 151, identification information, function support information about the detected communication apparatus 151, and information indicating the operation mode of the detected communication apparatus 151. A mode change necessity determination processing unit 304 determines whether to perform the network setting process for the communication apparatus 151 based on administrator password setting information and operation mode information about the communication apparatus 151 acquired by the communication apparatus information acquisition unit 303. In a case where it is determined to perform the network setting process, the predetermined application displays a network setting screen, whereas in a case where it is determined not to perform the network setting process, the predetermined application displays a notification screen for providing a notification so that the communication apparatus 151 operates in the connection setting mode. The notification screen is specifically a notification screen that prompts the user to change the communication apparatus 151 to the connection setting mode. A network setting processing means (e.g., unit) 305 is a processing unit configured to perform the network setting process for the communication apparatus 151 by transmitting network setting information to the communication apparatus 151. In the present embodiment, the network setting information refers to information that includes at least one of information for establishing a connection to the AP (the SSID and password of the AP), direct setting information, and IP address setting information. The IP address setting information includes information about a method for acquiring an IP address that is set for the communication apparatus 151, which will be described below.

The predetermined application receives, from the user, the infrastructure connection or the direct connection selected as a method for establishing a connection between the communication apparatus 151 and the terminal apparatus 101. Then, in a case where the infrastructure connection is selected by the user, the predetermined application receives, from the user, an SSID of an AP to which the communication apparatus 151 is to connect and an encryption method of the AP that are selected. Further, in a case where the infrastructure connection is selected by the user, the predetermined application receives, from the user, an IP address setting for the communication apparatus 151. The IP address refers to an identification number for identifying each communication apparatus connected to a network, such as the Internet or LAN. Each communication apparatus is assigned a non-duplicated unique IP address, whereby the communication apparatus can communicate with another communication apparatus. In the present embodiment, in a case where the terminal apparatus 101 transmits communication data to the communication apparatus 151 over the LAN established by the AP 131, it is necessary to assign an IP address to the communication apparatus 151 in order to identify a transmission destination of the communication data. In the present embodiment, the predetermined application receives, from the user, a selected method for acquiring an IP address to be set for the communication apparatus 151. A method for acquiring an Internet Protocol version 4 (IPv4) address, which is an example of an IP address, will be described. The predetermined application receives, from the user, one of a method in which an IP address of a communication apparatus is acquired automatically from the AP (automatic IP address acquisition) and a method in which the user manually inputs an IPv4 address (manual IP address input) that is selected as an IPv4 address acquisition method. Then, specifically, in a case where the manual IP address input is selected, the predetermined application receives input of an IP address, subnet mask, and default gateway from the user. In the present embodiment, the subnet mask corresponds to information indicating a scope of an IPv4 address that can be used to establish a connection to the AP 131. Further, the default gateway corresponds to the IP address of the AP 131.

Automatic IPv4 address acquisition will be described. In the present embodiment, the communication apparatus 151 requests assignment of an IPv4 address from the AP 131 using the Dynamic Host Configuration Protocol (DHCP). In response, the AP 131 transmits a predetermined IPv4 address, which is an unused IPv4 address among the IPv4 addresses managed by the AP 131, to the communication apparatus 151. The communication apparatus 151 sets the predetermined IPv4 address received from the AP 131 as an IPv4 address of the communication apparatus 151. Along with the IPv4 address, a subnet mask and default gateway information are also transmitted to the communication apparatus 151 and set on the communication apparatus 151. Next, manual IPv4 address input will be described. In the present embodiment, the communication apparatus 151 receives, from the terminal apparatus 101, IPv4 address information corresponding to an IPv4 address, subnet mask, and default gateway input by the user in the predetermined application. The communication apparatus 151 sets the IPv4 address, subnet mask, and default gateway based on the IPv4 address information corresponding to the input received from the terminal apparatus 101.

Next, a method for acquiring an Internet Protocol version 6 (IPv6) address, which is an example of an IP address, will be described. As an IPv6 address setting method, selection of one of a method that uses a stateless address, a method in which the user manually inputs an IPv6 address, and a method that uses the Dynamic Host Configuration Protocol for IP Version 6 (DHCPv6) is received from the user. The method that uses a stateless address refers to, for example, a method in which the communication apparatus 151 automatically generates an IPv6 address based on a Router Advertisement (RA) packet notified by a router and sets the generated IPv6 address as an IPv6 address of the communication apparatus 151. The method in which the user manually inputs an IPv6 address refers to, for example, a method in which IPv6 address information corresponding to an IPv6 address input by the user in the predetermined application is set on the communication apparatus 151. The method that uses DHCPv6 refers to, for example, a method in which an IPv6 address is acquired from the AP 131 by requesting assignment of an IPv6 address from the AP 131 using DHCPv6 and the acquired IPv6 address is set on the communication apparatus 151.

### Administrator Password Setting

The user can set an administrator password via a screen displayed on an operation panel, which is the display unit 161 of a main body of the communication apparatus 151, or a screen displayed on the display unit 108 of the terminal apparatus 101 using a remote user interface (remote UI) function of the communication apparatus 151. The remote UI function will be described. The communication apparatus 151 including a webserver function communicates with a web browser application, which is an application different from the predetermined application and operating on the terminal apparatus 101, via the Hypertext Transfer Protocol (HTTP), thereby making it possible to verify various types of setting information, including the network setting of the communication apparatus 151, and to change a setting value using a web browser of the terminal apparatus 101. This function is referred to as the remote UI function, and hereinafter, a screen on the display unit 108 configured to verify various types of setting information about the communication apparatus 151 and to receive a change to various setting values using the web browser of the terminal apparatus 101 will be referred to as a remote UI screen. While the remote UI screen is displayed using the web browser application different from the predetermined application in the present embodiment, this is not intended to be limiting. For example, the predetermined application may include a web browser function, and the remote UI screen may be displayed using the web browser function.

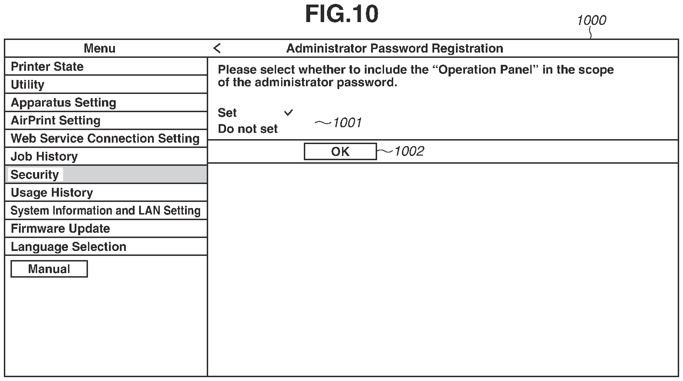

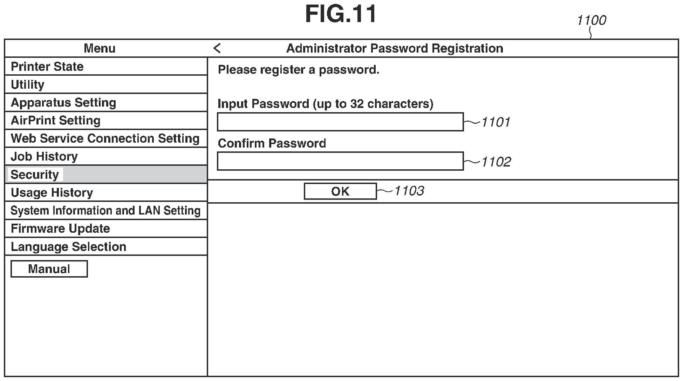

Further, in the present embodiment, the administrator password refers to a password that is input by the user for administrator password authentication in a case where the user performs an operation to verify various types of setting information about the communication apparatus 151 or to change various setting values. Figs. 10 and 11 illustrate examples of a screen related to the administrator password setting. Each of Figs. 10 and 11 illustrates a remote UI screen of the communication apparatus 151. While screens displayed on the remote UI screen are examples of the screen related to the administrator password setting in the present embodiment, this is not intended to be limiting. For example, the screen related to the administrator password setting may be a screen displayed on the operation panel of the communication apparatus 151. Fig. 10 will be described. A screen 1000 for selecting a scope of the administrator password includes a region 1001 for selecting the scope of the administrator password and an OK button 1002. The scope of the administrator password corresponds to the scope for receiving input of the administrator password from the user as authentication for performing an operation related to various settings of the communication apparatus 151. The region 1001 is a region for receiving a user selection as to whether to set the operation panel of the communication apparatus 151 as the scope. In a case where the OK button 1002 is operated in a state where a user selection as to whether to set the operation panel of the communication apparatus 151 as the scope is received, the web browser application configured to display the remote UI screen displays an administrator password input screen. Fig. 11 illustrates an example of the input screen. An administrator password input screen 1100 includes an administrator password input box 1101, an administrator password confirmation box 1102, and an OK button 1103. The administrator password input box 1101 is a region for receiving input of the administrator password from the user. The administrator password confirmation box 1102 is a region in which the user re-inputs the password input in the administrator password input box 1101. In a case where the OK button 1103 is operated in a state where the password input in the administrator password confirmation box 1102 matches the password input in the administrator password input box 1101, the administrator password is registered.

Further, as described above, a trigger for causing the communication apparatus 151 to start operating in the connection setting mode may be the user pressing the connection setting mode button. In other words, an operation on the main body of the communication apparatus 151 is required to cause the communication apparatus 151 to operate in the connection setting mode. Furthermore, as described above, in a case where the operation panel is set as the scope of the administrator password on the communication apparatus 151, the user is required to input the administrator password on the operation panel of the communication apparatus 151 to perform an operation on the main body of the communication apparatus 151.

Accordingly, the state where the communication apparatus 151 operates in the connection setting mode corresponds to a state where the administrator password is input to the communication apparatus 151 and authenticated. In other words, in the present embodiment, the connection setting mode corresponds to a mode configured to be enabled in a case where the administrator password is input by the user.

In a case where the communication apparatus 151 is a communication apparatus without an operation panel, it is impossible for the user to input the administrator password to the communication apparatus 151. Further, in a case where the communication apparatus 151 allows the operation panel to be set as the scope of the administrator password, it is possible to disable administrator password authentication by a user operation on the communication apparatus 151. In other words, it is unnecessary to input the administrator password to cause a communication apparatus without an operation panel or a communication apparatus with administrator password authentication disabled by the user to start operating in the connection setting mode. The communication apparatus 151 that allows the operation panel to be set as the scope of the administrator password is, for example, a communication apparatus that includes an operation panel.

### Issue Solved by the Present Embodiment

There is a configuration in which the terminal apparatus 101 transmits information for establishing a connection to an AP without determining whether administrator password authentication is performed by the communication apparatus 151, in order to connect the communication apparatus 151 to the AP by the connection setting process. However, the conventional configuration allows a third party without knowing the administrator password to transmit information for establishing a connection to the AP from the terminal apparatus 101 to the communication apparatus 151, which may result in the third party changing the AP to which the communication apparatus 151 is connected.

In order to solve such an issue, the terminal apparatus 101 performs a process for preventing the network setting of the communication apparatus 151 from being changed by the third party in the present embodiment. Specifically, the predetermined application of the terminal apparatus 101 controls the terminal apparatus 101 so that the network setting of the communication apparatus 151 is not executed in a case where administrator password authentication is not performed by the communication apparatus 151. Further, the predetermined application controls the terminal apparatus 101 so that the network setting of the communication apparatus 151 can be executed in a case where administrator password authentication is performed by the communication apparatus 151. The predetermined application displays a notification screen to prompt the user to change the communication apparatus 151 to the connection setting mode so that the network setting of the communication apparatus 151 is not executed.

Further, in the conventional configuration, in a case where the communication apparatus 151 detected by a search performed by the terminal apparatus 101 including the predetermined application is a communication apparatus being connected to the terminal apparatus 101 via an access point, the predetermined application performs a process for enabling the network setting of the communication apparatus 151 to be executed. However, there is an issue that executing the network setting by the predetermined application may change the IP address of the communication apparatus 151 and disconnect the infrastructure connection established between the terminal apparatus 101 and the communication apparatus 151.

Specifically, the issue is that the connection between the access point and the communication apparatus 151 may be disconnected, which may make it impossible for the terminal apparatus 101 to connect to the communication apparatus 151 via the access point and may make it impossible to use the communication apparatus 151 from the terminal apparatus 101.

In order to solve such an issue, the predetermined application performs a process for preventing the infrastructure connection established between the terminal apparatus 101 and the communication apparatus 151 from being disconnected in the present embodiment. Specifically, in a case where the infrastructure connection is established between the communication apparatus 151 and the terminal apparatus 101, the predetermined application does not perform the network setting process for the communication apparatus 151. In a case where the connection between the communication apparatus 151 and the terminal apparatus 101 is a connection using the internal AP of the communication apparatus 151 enabled in a case where the communication apparatus 151 operates in the connection setting mode, the predetermined application performs the process for enabling the network setting process for the communication apparatus 151 to be performed. In a case where the connection between the communication apparatus 151 and the terminal apparatus 101 is a connection using an AP different from the internal AP of the communication apparatus 151 enabled in a case where the communication apparatus 151 operates in the connection setting mode, the predetermined application performs a process for preventing the network setting process for the communication apparatus 151 from being performed. The internal AP of the communication apparatus 151 enabled in a case where the communication apparatus 151 operates in the connection setting mode corresponds to, in other words, the internal AP disabled in a case where a predetermined time has passed since enablement of the internal AP. Further, the process for preventing the network setting process for the communication apparatus 151 from being performed is, specifically, a process in which in a case where the communication apparatus 151 is a communication apparatus having an infrastructure connection to a terminal apparatus, a button for receiving the network setting of the communication apparatus 151 from the user is displayed in a grayed-out state, thereby preventing the network setting of the communication apparatus 151 from being received from the user.

The present disclosure does not necessarily solve all of the above-described issues and may solve one or more of the above-described issues. In other words, the present disclosure does not necessarily perform all of the processes for solving the above-described issues and may perform one or more of the processes for solving the above-described issues. Processes Performed by the Predetermined Application in the Present Embodiment

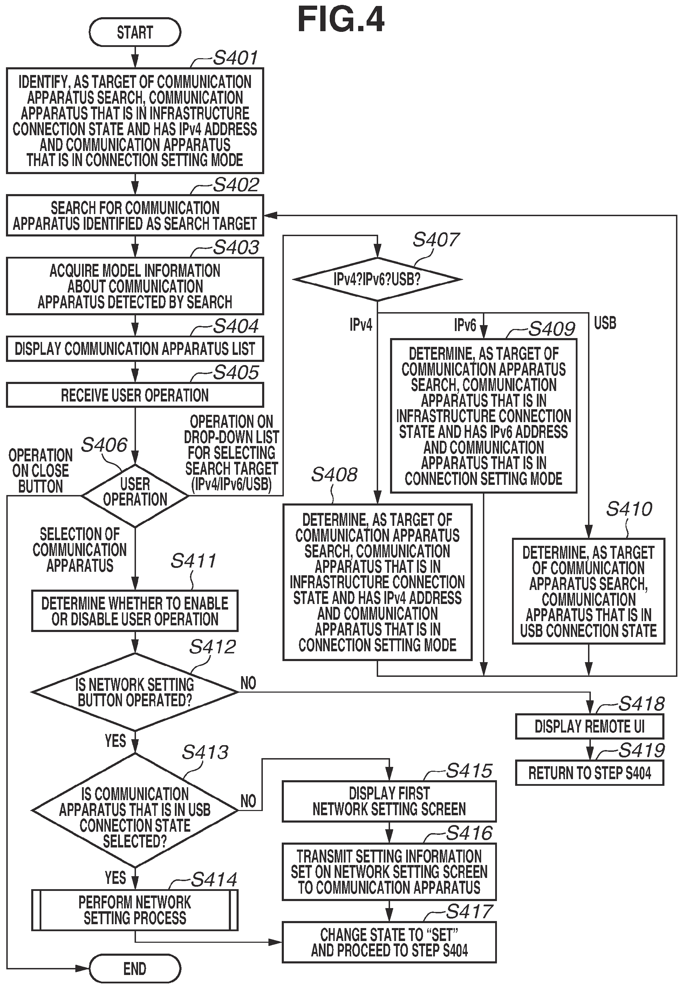

Fig. 4 is a flowchart illustrating an example of processes performed by the terminal apparatus 101 using the predetermined application in the present embodiment. Each process in the flowchart in Fig. 4 is realized, for example, by the CPU 103 loading the predetermined application stored in a memory, such as the ROM 104, into the RAM 105 and executing the predetermined application. Further, the flowchart in Fig. 4 is started in a case where an operation is performed on a screen displayed by the predetermined application to search for the communication apparatus 151.

The flowchart in Fig. 4 may be started upon activation of the predetermined application.

In step S401, the predetermined application identifies, as a target of a communication apparatus search performed in step S402, which will be described below, a communication apparatus that is connected to the same network as the terminal apparatus 101 and has an IPv4 address and a communication apparatus that is in the connection setting mode. Hereinafter, a communication apparatus that is connected to the same network as the terminal apparatus 101 is referred to as a communication apparatus that is in an infrastructure connection state, and a communication apparatus that has an IPv4 address among communication apparatuses that are in the infrastructure connection state is referred to as a communication apparatus in the infrastructure connection state and has an IPv4 address.

In step S402, the predetermined application performs a process for searching for a communication apparatus identified as a search target. Since a communication apparatus that is in the infrastructure connection state and has an IPv4 address is identified as a search target in step S401, the predetermined application performs the process for searching for a communication apparatus that is in the infrastructure connection state and has an IPv4 address. The process for searching for a communication apparatus that is in the infrastructure connection state and has an IPv4 address will be described. Specifically, the predetermined application generates a Simple Network Management Protocol (SNMP) packet for detecting a communication apparatus that is in the infrastructure connection state, has an IPv4 address, and is on the network to which the terminal apparatus 101 is connected. The SNMP packet includes information for designating a transmission destination of the SNMP packet. In the process for searching for a communication apparatus that is in the infrastructure connection state and has an IPv4 address, information corresponding to a communication apparatus that is in the infrastructure connection state, has an IPv4 address, and is on the network to which the terminal apparatus 101 is connected is included as information for designating the transmission destination of the SNMP packet. In other words, the predetermined application instructs the OS to transmit the SNMP packet to a communication apparatus that is in the infrastructure connection state and has an IPv4 address. Consequently, the OS performs a search for a communication apparatus that is in the infrastructure connection state and has an IPv4 address, using the SNMP packet.

Furthermore, the predetermined application performs a process for searching for a communication apparatus located near the terminal apparatus 101 and operating in the connection setting mode, simultaneously with the process for searching for a communication apparatus that is in the infrastructure connection state and has an IPv4 address. Specifically, the predetermined application instructs the OS to perform an AP search. Then, the predetermined application determines whether any SSID of an AP detected by the search performed by the OS includes a character string indicating a vendor name and being a character string included in the SSID of the connection setting AP. The character string indicating the vendor name is stored in advance in the predetermined application.

The search for a communication apparatus operating in the connection setting mode is not limited to being performed in parallel with the search for a communication apparatus that is in the infrastructure connection state and has an IPv4 address, and may instead be performed after the search for a communication apparatus that is in the infrastructure connection state and has an IPv4 address. Further, the search for a communication apparatus operating in the connection setting mode may be performed at a predetermined point in time after the predetermined application is activated and before the search for a communication apparatus that is in the infrastructure connection state and has an IPv4 address is performed. The process for searching for a communication apparatus that is in the infrastructure connection state and has an IPv4 address and the process for searching for a communication apparatus located near the terminal apparatus 101 and operating in the connection setting mode are also performed in step S402 performed after step S408 is performed.

In step S403, the predetermined application acquires model information about a communication apparatus detected by the communication apparatus search performed by the OS. In the present embodiment, an internal management information base (MIB) of the communication apparatus 151 manages model information about the communication apparatus 151. The MIB configured herein may be a standard MIB, such as a communication apparatus MIB, or a vendor-specific MIB. In the process, the predetermined application acquires, as model information about the detected communication apparatus, model information about the communication apparatus that is managed by the vendor-specific MIB in the communication apparatus. While the predetermined application acquires information managed by the vendor-specific MIB in the detected communication apparatus as model information about the detected communication apparatus in the present embodiment, this is not intended to be limiting. In other words, the predetermined application may acquire information managed by the standard MIB in the detected communication apparatus as model information about the detected communication apparatus.

Further, while the OS performs the communication apparatus search using an SNMP packet, i.e., based on the SNMP protocol in the present embodiment, this is not intended to be limiting. In other words, the OS may perform the communication apparatus search based on a protocol other than SNMP, such as the multicast Domain Name System (multicast DNS) or Bonjour.

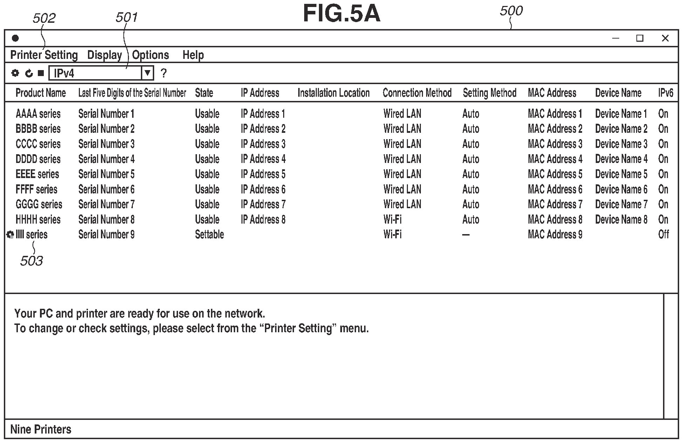

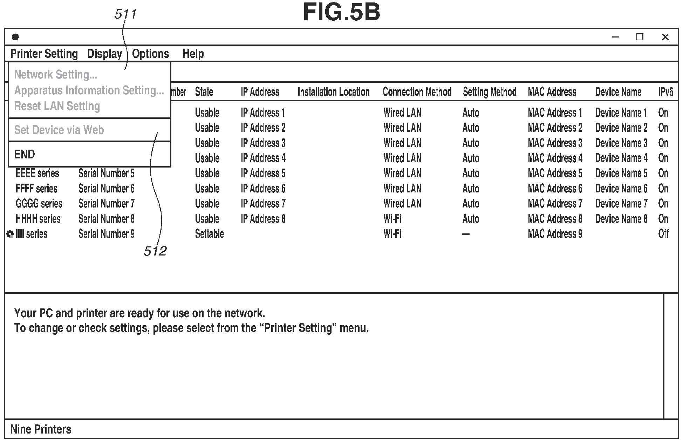

In step S404, the predetermined application displays an example of a screen that displays a communication apparatus list. The communication apparatus list is a list of communication apparatuses detected (discovered) by the communication apparatus search performed by the OS. Figs. 5A and 5B illustrate examples of screens displayed during the process. Fig. 5A will be described. A screen 500 is an example of a screen displayed upon detection of a communication apparatus that is in the infrastructure connection state and has an IPv4 address and a communication apparatus that is in the connection setting mode. The screen 500 includes a drop-down list 501 for selecting a search target, a menu 502 related to communication apparatus settings, and a region 503 for displaying a communication apparatus list. The drop-down list 501 for selecting a search target is a drop-down list from which the user can select a communication apparatus search target. The drop-down list 501 is configured to allow the user to select, as a target of the communication apparatus search performed by the OS in step S402, a communication apparatus that is in the infrastructure connection state and has an IPv4 address and a communication apparatus that is in the connection setting mode, a communication apparatus that is in the infrastructure connection state and has an IPv6 address and a communication apparatus that is in the connection setting mode, or a communication apparatus that is in a USB connection state. In a case where a communication apparatus is selected from the drop-down list 501 as a search target by the user, the target of the communication apparatus search is identified. In a case where the drop-down list 501 is operated, a plurality of options is displayed in the drop-down list 501. The plurality of options includes "IPv4", which is an option for searching for a communication apparatus that is in the infrastructure connection state and has an IPv4 address and a communication apparatus that is in the connection setting mode, "IPv6", which is an option for searching for a communication apparatus that is in the infrastructure connection state and has an IPv6 address and a communication apparatus that is in the connection setting mode, and "USB", which is an option for searching for a communication apparatus that is in the USB connection state. The menu 502 related to communication apparatus settings is configured to receive a user instruction related to a setting of a communication apparatus identified as a target of the network setting. Hereinafter, a communication apparatus identified as a target of the network setting will be referred to as the communication apparatus selected as a setting target. The communication apparatus selected as a setting target is, in other words, a communication apparatus that is displayed in the region 503, which will be described below, and selected as the target of the network setting by the user. In a case where the menu 502 is operated by the user, the predetermined application displays a Network Setting button 511 and a Set Device via Web button 512. Fig. 5B illustrates an example of a screen displayed by the predetermined application in a case where the menu 502 related to communication apparatus settings is operated by the user. Fig. 5B includes the Network Setting button 511 and the Set Device via Web button 512. In a case where the menu 502 is operated by the user in a state where no communication apparatus in the region 503 is selected, the buttons 511 and 512 are both displayed in a grayed-out state. The Network Setting button 511 is a button for receiving the network setting of the communication apparatus selected as a setting target from the user. Further, the Set Device via Web button 512 is a button for displaying the remote UI for executing various settings of the communication apparatus selected as a setting target. The region 503 for displaying the communication apparatus list is a region configured to present information about a communication apparatus detected by the communication apparatus search performed in step S402. The information about the communication apparatus displayed in the region 503 corresponds to information acquired by the predetermined application from the communication apparatus detected by the search performed by the OS. In the present embodiment, the information about the communication apparatus includes a product name, serial number, state information, IP address, and a media access control (MAC) address of the communication apparatus and connection method information about a connection between an AP and the communication apparatus. For a communication apparatus that is in the infrastructure connection state, "Usable", which corresponds to a state where the communication apparatus is usable using the terminal apparatus 101, is displayed in the state information. Communication apparatuses AAAA series to HHHH series on the screen 500 are examples of a communication apparatus that is in the infrastructure connection state. Further, for a communication apparatus operating in the connection setting mode, "Settable", which corresponds to a state where a wireless network setting can be executed using the terminal apparatus 101, is displayed. A communication apparatus IIII series on the screen 500 is an example of the communication apparatus operating in the connection setting mode. Further, in the present embodiment, text indicating a wired LAN or wireless LAN method is displayed as connection method information in the region 503. While the text "wired LAN" is displayed in a case where the connection method is a wired LAN and the text "Wi-Fi" is displayed in a case where the connection method is a wireless LAN in the region 503, this is not intended to be limiting. In other words, text indicating that the connection method is a wired LAN may be displayed in a case where the connection method is a wired LAN, and text indicating that the connection method is a wireless LAN may be displayed in a case where the connection method is a wireless LAN, or text other than "wired LAN" or "Wi-Fi" may be displayed. Further, an icon indicating the connection method may be displayed in addition to text.

In step S405, the predetermined application receives a user operation on the screen displayed in step S404.

In step S406, the predetermined application determines whether the user operation received in step S405 is a user operation on a drop-down list for selecting a search target or corresponds to selection of a communication apparatus displayed in the communication list. In a case where the predetermined application determines that the received user operation is an operation on the drop-down list 501 for selecting a search target ("OPERATION ON DROP-DOWN LIST FOR SELECTING SEARCH TARGET" in step S406), the processing proceeds to step S407. In a case where the predetermined application determines that the received user operation is selection of a communication apparatus displayed in the communication apparatus list ("SELECTION OF COMMUNICATION APPARATUS" in step S406), the processing proceeds to step S411.

In step S407, the predetermined application determines which communication apparatus is identified as a search target in a case where the drop-down list 501 for selecting a search target is operated by the user. In a case where the predetermined application determines that a communication apparatus that is in the infrastructure connection state and has an IPv4 address and a communication apparatus that is in the connection setting mode are identified as search targets, the processing proceeds to step S408. Further, in a case where the predetermined application determines that a communication apparatus that is in the infrastructure connection state and has an IPv6 address and a communication apparatus that is in the connection setting mode are identified as search targets, the processing proceeds to step S409. Further, in a case where the predetermined application determines that a communication apparatus that is in the USB connection state is identified as a search target, the processing proceeds to step S410.

In step S408, the predetermined application determines, as targets of the communication apparatus search, a communication apparatus that is in the infrastructure connection state and has an IPv4 address and a communication apparatus that is in the connection setting mode. In the case where the predetermined application determines a communication apparatus that is in the infrastructure connection state and has an IPv4 address and a communication apparatus that is in the connection setting mode as search targets in step S408, a search for a communication apparatus that is in the infrastructure connection state and has an IPv4 address and a communication apparatus that is in the connection setting mode is performed in step S402. Since details of the search for a communication apparatus that is in the infrastructure connection state and has an IPv4 address and a communication apparatus that is in the connection setting mode are described above in step S402, a description thereof is omitted.

In step S409, the predetermined application determines, as a target of the communication apparatus search, a communication apparatus that is connected to the same network as the terminal apparatus 101, is in the infrastructure connection state, and has an IPv6 address and a communication apparatus that is in the connection setting mode. In the case where the predetermined application determines a communication apparatus that is in the infrastructure connection state and has an IPv6 address and a communication apparatus that is in the connection setting mode as search targets in step S409, a search for a communication apparatus that is in the infrastructure connection state and has an IPv6 address and a communication apparatus that is in the connection setting mode is performed in step S402. The predetermined application instructs the OS to transmit an SNMP packet to a communication apparatus that is in the infrastructure connection state and has an IPv6 address, whereby the search for a communication apparatus that is in the infrastructure connection state and has an IPv6 address and a communication apparatus that is in the connection setting mode is performed. Details of the search are similar to those of the search for a communication apparatus that is in the infrastructure connection state and has an IPv4 address and a communication apparatus that is in the connection setting mode, so that a description thereof is omitted. Further, the screen displayed in step S404 in the case where a communication apparatus that is in the infrastructure connection state and has an IPv6 address and a communication apparatus that is in the connection setting mode are identified as search targets in step S409 is similar to that in the case where a communication apparatus that is in the infrastructure connection state and has an IPv4 address and a communication apparatus that is in the connection setting mode are identified as search targets as described above in step S404, so that a description thereof is omitted.

In step S410, the predetermined application determines, as a target of the communication apparatus search, a communication apparatus that is in the USB connection state. In the case where the predetermined application determines a communication apparatus that is in the USB connection state as a search target in step S410, the predetermined application performs a search for a communication apparatus that is in the USB connection state in step S402. The search for a communication apparatus that is in the USB connection state, which is performed by the predetermined application, will be described. Hereinafter, a communication apparatus connected to the terminal apparatus 101 via the USB cable will be referred to as a communication apparatus that is in the USB connection state. In the process, the predetermined application generates an SNMP packet for detecting a communication apparatus that is in the USB connection state. The SNMP packet includes, as destination designation information, information about a communication apparatus that is in the USB connection state and detected using an application programming interface (API) of the OS. In other words, the predetermined application instructs the OS to transmit the SNMP packet to a communication apparatus that is in the USB connection state and detected by the OS. In response, the OS performs a search for a communication apparatus that is in the USB connection state via USB using the SNMP packet. In the present embodiment, as described above, the predetermined application performs a search for a communication apparatus that is in the connection setting mode in a search for a communication apparatus that is in the infrastructure connection state, whereas the predetermined application does not perform a search for a communication apparatus that is in the connection setting mode in a search for a communication apparatus that is in the USB connection state.

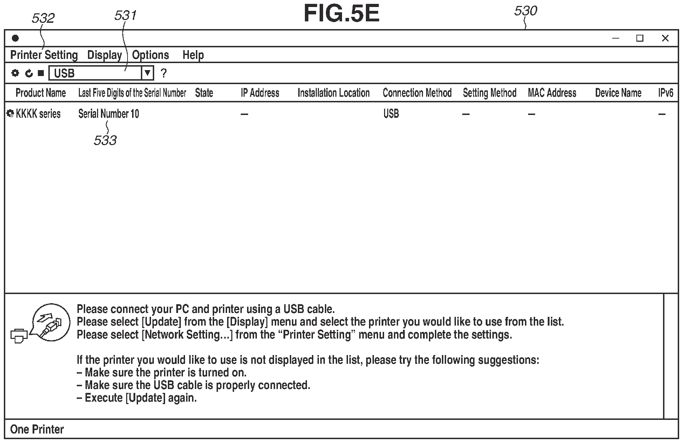

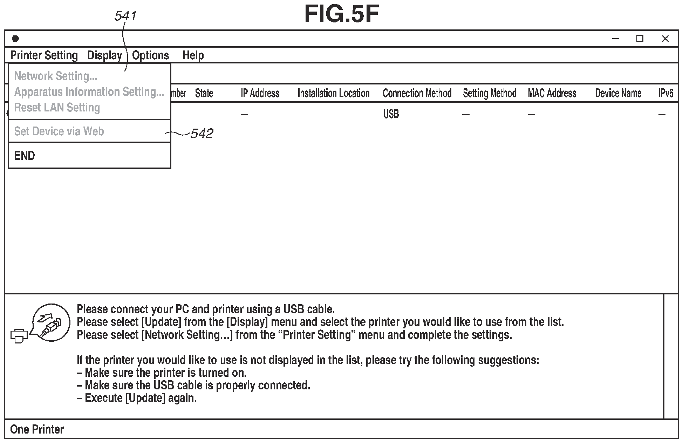

Next, Fig. 5E will be described. Fig. 5E illustrates an example of the screen displayed in step S404 in the case where a communication apparatus that is in the USB connection state is determined as a search target in step S410. A screen 530 is an example of a screen displayed in a case where a communication apparatus that is in the USB connection state is detected. Hereinafter, a communication apparatus "KKKK Series", which is a detected communication apparatus in the USB connection state, will be referred to as the communication apparatus 151. The communication apparatus 151 corresponds to a communication apparatus connected to the terminal apparatus 101 via USB. The screen 530 includes a drop-down list 531 for selecting a search target, a menu 532 related to communication apparatus settings, and a region 533 for displaying a communication apparatus list. The drop-down list 531 for selecting a search target is similar to the drop-down list 501 for selecting a search target, so that a description thereof is omitted. Since the screen 530 is an example of a screen displayed in a case where a communication apparatus that is in the USB connection state is detected, text indicating that the search target is a communication apparatus that is in the USB connection state is displayed in the drop-down list 531. As an example of the text, "USB" is displayed in the drop-down list 531. The menu 532 related to communication apparatus settings is similar to the menu 502 related to communication apparatus settings, so that a description thereof is omitted. In a case where the menu 532 related to communication apparatus settings is operated by the user, the predetermined application displays a Network Setting button 541 and a Set Device via Web button 542. Fig. 5F illustrates an example of a screen displayed by the predetermined application in a case where the menu 532 related to communication apparatus settings is operated by the user. Fig. 5F includes the Network Setting button 541 and the Set Device via Web button 542.

In the present embodiment, in a case where the menu 532 is operated by the user in a state where no communication apparatus in the region 533 is selected, like the buttons 511 and 512, the buttons 541 and 542 are both displayed in a grayed-out state. The region 533 for displaying a communication apparatus list is similar to the region 503 for displaying a communication apparatus list. In a case where a communication apparatus that is in the USB connection state is detected, the predetermined application acquires a product name and serial number of the communication apparatus from the communication apparatus 151 detected in step S403 but does not acquire other information such as an IP address of the communication apparatus. Accordingly, in the region 533, the product name and serial number of the communication apparatus 151 are displayed while other information such as the IP address is not displayed. This is not intended to be limiting, and the predetermined application may acquire an IP address and the like from a communication apparatus detected by a search for a communication apparatus that is in the USB connection state, and may display the IP address and the like in the region 533. Further, in the present embodiment, the connection method in the region 533 corresponds to a method by which the connection between the terminal apparatus 101 and the communication apparatus 151 is established. In the present embodiment, since the connection between the terminal apparatus 101 and the communication apparatus 151 is a USB connection, "USB", which indicates a USB connection, is displayed in the region 533. Further, in a case where a communication apparatus that is in the USB connection state is identified as a search target by the user in step S410, which will be described below, text indicating a USB connection is displayed as information about the connection method. While "USB" is displayed as an example of the text in the present embodiment, this is not intended to be limiting. In other words, any text indicating that the connection method is USB may be displayed, and text other than "USB" may be displayed. Further, an icon indicating the connection method may be displayed in addition to text.

In step S411, which is performed in a case where the predetermined application determines that the user operation is selection of a communication apparatus displayed in the communication apparatus list in step S406, the predetermined application determines whether to enable or disable a user operation on a button included in the screen displayed by the process in step S404. Specifically, the predetermined application determines whether to enable or disable a user operation on the Network Setting button and a user operation on the Set Device via Web button.

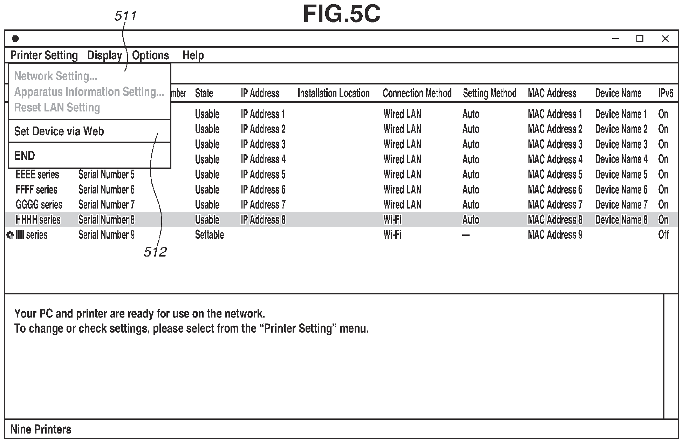

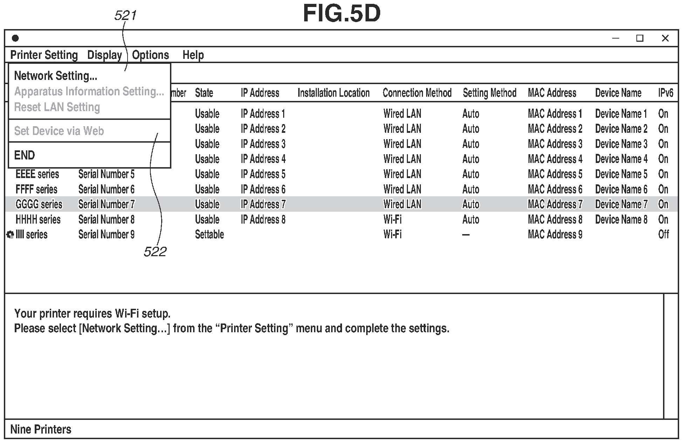

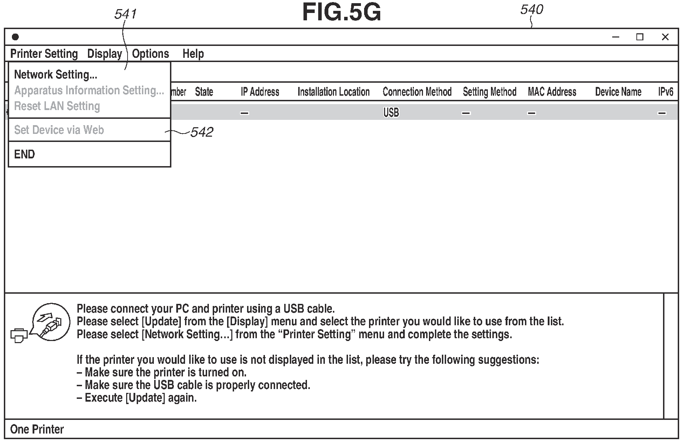

Figs. 5C, 5D, and 5G illustrate examples of screens displayed in the process. Fig. 5C illustrates examples of the Network Setting button and the Set Device via Web button displayed in a case where a communication apparatus that is in the infrastructure connection state is identified as a setting target. Fig. 5C corresponds to a state where a communication apparatus HHHH series, which is a communication apparatus that is in the infrastructure connection state, is selected by the user and identified as a setting target. In the present embodiment, in a case where a communication apparatus that is in the infrastructure connection state is identified as a setting target, the predetermined application displays the Network Setting button 511 in a grayed-out state to prevent a user operation from being received. Further, in a case where a communication apparatus that is in the infrastructure connection state is identified as a setting target, the predetermined application displays the Set Device via Web button 512 so that the Set Device via Web button 512 can be operated by the user. In other words, the predetermined application displays the Set Device via Web button 512 in a non-grayed-out state. While the Network Setting button 511 is displayed in a grayed-out state in a case where a communication apparatus that is in the infrastructure connection state is identified as a setting target in the present embodiment, this is not intended to be limiting. For example, the Network Setting button 511 may be displayed so that the Network Setting button 511 can be operated by the user also in a case where a communication apparatus that is in the infrastructure connection state is identified as a setting target. Further, in a case where the Network Setting button 511 is operated by the user, a notification indicating that the network setting of the communication apparatus cannot be executed may be provided.

Next, Fig. 5D illustrates examples of the Network Setting button and the Set Device via Web button displayed in a case where a communication apparatus that is in the connection setting mode is identified as a setting target. Fig. 5D corresponds to a state where a communication apparatus IIII series, which is a communication apparatus that is in the connection setting mode, is selected by the user and identified as a setting target. In the present embodiment, in a case where a communication apparatus that is in the connection setting mode is identified as a setting target, the predetermined application displays a Network Setting button 521 so that Network Setting button 521 can be operated by the user. Further, in the present embodiment, in a case where a communication apparatus that is in the connection setting mode is identified as a setting target, the predetermined application displays the Set Device via Web button 522 in a grayed-out state to prevent a user operation from being received. The Network Setting button 521 is a button similar to the Network Setting button 511, and the Set Device via Web button 522 is a button similar to the Set Device via Web button 512. While the Set Device via Web button 522 is displayed in a grayed-out state in a case where a communication apparatus that is in the connection setting mode is identified as a setting target in the present embodiment, this is not intended to be limiting. For example, the Set Device via Web button 522 may be displayed so that the Set Device via Web button 522 can be operated by the user also in a case where a communication apparatus that is in the connection setting mode. Further, in a case where the Set Device via Web button 522 is operated by the user, a notification indicating that configuration of a device via a web cannot be executed may be provided.

Next, Fig. 5G illustrates an example of a display in a case where a communication apparatus that is in the USB connection state is identified as a setting target. Fig. 5G corresponds to a state where a communication apparatus KKKK series, which is a communication apparatus that is in the USB connection state, is selected by the user and identified as a setting target. In the present embodiment, in a case where a communication apparatus that is in the USB connection state is identified as a setting target, the predetermined application displays the Network Setting button 541 so that the Network Setting button 541 can be operated by the user. Further, in the present embodiment, the predetermined application displays the Set Device via Web button 542 in a grayed-out state to prevent a user operation from being received. The Network Setting button 541 is similar to the Network Setting buttons 511 and 521, and the Set Device via Web button 542 is similar to the Set Device via Web buttons 512 and 522.

In the present embodiment, the predetermined application receives the network setting of a communication apparatus that is in the connection setting mode or the network setting of a communication apparatus that is in the USB connection state, and transmits the network setting information to the communication apparatus. Then, in step S417, which will be described below, the predetermined application changes the state of the communication apparatus that is the destination of the transmitted network setting information to "Set". Then the processing proceeds to step S404, and the predetermined application displays "Set" as the state of the set communication apparatus in the communication apparatus list. Thus, the predetermined application performs the process also in a case where the processing proceeds from step S417 to step S404. In the process performed in a case where the processing proceeds from step S417 to step S404, the predetermined application disables both a user operation on the Network Setting button and a user operation on the Set Device via Web button. Details of the process performed in a case where the processing proceeds from step S417 to step S404 will be described below in step S417.

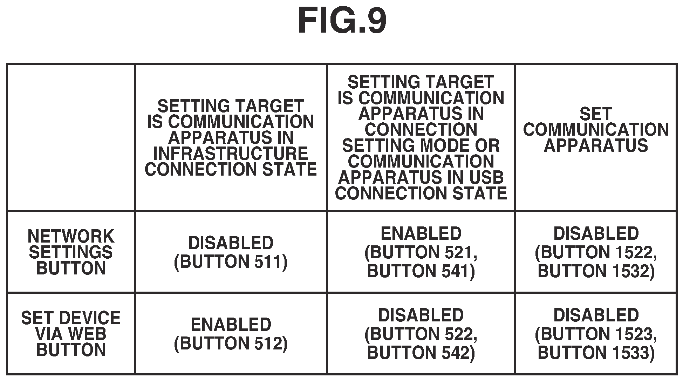

In summary, in the present embodiment, in a case where the communication apparatus selected as a setting target is a communication apparatus that is in the connection setting mode or a communication apparatus that is in the USB connection state, a user operation on the Network Setting button is enabled, and in a case where the communication apparatus 151, which is the communication apparatus selected as a setting target, is a communication apparatus that is in the infrastructure connection state or the communication apparatus 151 becomes a set communication apparatus, a user operation on the Network Setting button is disabled. Further, a user operation on the Set Device via Web button is enabled in a case where the communication apparatus 151 is a communication apparatus that is in the infrastructure connection state. Further, a user operation on the Set Device via Web button is disabled in a case where the communication apparatus 151 is a communication apparatus that is in the connection setting mode or a communication apparatus that is in the USB connection state or the communication apparatus 151 becomes a set communication apparatus. In other words, the predetermined application performs control so that in a case where a communication apparatus that is in the infrastructure connection state is identified as a setting target, the predetermined application does not receive the network setting of the communication apparatus from the user, and in a case where a communication apparatus that is in the connection setting mode or a communication apparatus that is in the USB connection state is identified as a setting target, the predetermined application receives the network setting of the communication apparatus from the user. However, the predetermined application performs control so that in a case where a communication apparatus that is in the infrastructure connection state is identified as a setting target, the remote UI is displayed (refer to Fig. 9). Administrator password authentication by inputting the administrator password on the remote UI screen to log in to the remote UI screen may be received.

Depending on a user setting of the communication apparatus 151, administrator password authentication on the remote UI screen can be switched between enabled and disabled states. Thus, in a case where a communication apparatus is set to disable administrator password authentication on the remote UI screen, administrator password authentication on the remote UI screen is not performed.

In step S412, the predetermined application determines which button is operated by the user. Specifically, the predetermined application determines whether the Network Setting button is operated in a state where a communication apparatus is identified as a setting target or the Set Device via Web button is operated. In a case where the predetermined application determines that the Network Setting button is operated (YES in step S412), the processing proceeds to step S413. In a case where the predetermined application determines that the Set Device via Web button is operated (NO in step S412), the processing proceeds to step S418. As described above, the Network Setting button is a button for receiving the network setting of the communication apparatus selected as a setting target from the user. However, as described above, the predetermined application performs control so that in a case where a communication apparatus that is in the infrastructure connection state is identified as a setting target, the predetermined application does not receive the network setting from the user, and in a case where a communication apparatus that is in the connection setting mode or a communication apparatus that is in the USB connection state is identified as a setting target, the predetermined application receives the network setting from the user. In other words, a case where it is determined that the Network Setting button is operated in the process corresponds to a case where the communication apparatus selected as a setting target is a communication apparatus that is in the connection setting mode or a communication apparatus that is in the USB connection state. Further, as described above, the Set Device via Web button is a button for displaying the remote UI for executing the settings of the communication apparatus selected as a setting target. However, as described above, in the present embodiment, the predetermined application performs control so that in a case where a communication apparatus that is in the infrastructure connection state is identified as a setting target, the remote UI is displayed, and in a case where a communication apparatus that is in the connection setting mode is identified as a setting target, the remote UI is not displayed. In other words, a case where it is determined that the Set Device via Web button is operated in the process corresponds to a case where the communication apparatus selected as a setting target is a communication apparatus that is in the infrastructure connection state.

In step S413, the predetermined application determines whether a communication apparatus that is in the USB connection state is selected as a setting target. Specifically, the predetermined application determines whether the communication apparatus selected as a setting target when the Network Setting button or the Set Device via Web button is operated by the user operation in step S412 is a communication apparatus that is in the USB connection state. In a case where the predetermined application determines yes (YES in step S413), the processing proceeds to step S414. In a case where the predetermined application determines no (NO in step S413), the processing proceeds to step S415. As described above, a case where the Network Setting button is operated in step S412 corresponds to a case where a communication apparatus that is in the connection setting mode or a communication apparatus that is in the USB connection state is selected as a setting target by the user. In other words, a case where the predetermined application determines no in the process corresponds to a case where a communication apparatus that is in the connection setting mode is selected as a setting target.

In step S414, the predetermined application performs a network setting process. Details of the network setting process will be described below.

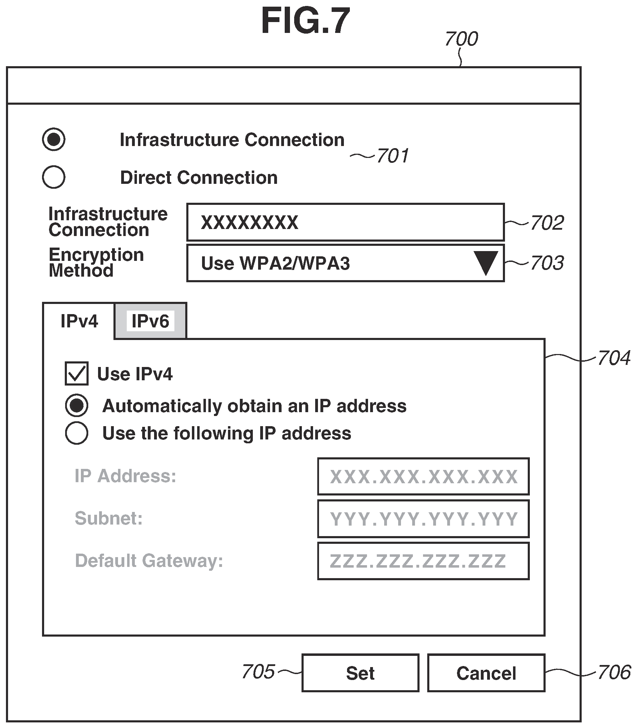

In step S415, which is performed in a case where the result of the determination is no in step S413, the predetermined application displays a first network setting screen. In a case where an instruction to display the first network setting screen is received from the user, the terminal apparatus 101 establishes a temporary connection to a communication apparatus operating in the connection setting mode, acquires IP address setting information set on the communication apparatus, disconnects the connection to the communication apparatus, and re-establishes a connection to a predetermined AP. Receipt of an instruction to display the first network setting screen from the user corresponds to the user operating the Network Setting button 521 in a state where a communication apparatus operating in the connection setting mode is selected on the screen 500 by the user. Fig. 7 illustrates an example of the screen displayed in the process. A screen 700 includes a region 701 for selecting a connection method, an SSID input box 702, a pull-down list 703 for selecting an encryption method, a region 704 for setting an IP address, a Set button 705, and a Cancel button 706. The region 701 for selecting a connection method receives a user selection of the infrastructure connection or the direct connection as a method for establishing a connection between the communication apparatus 151 and the terminal apparatus 101. The SSID input box 702 is a box for inputting an SSID of an AP identified as a connection target for the communication apparatus 151. Further, the pull-down list 703 for selecting an encryption method is a region for receiving an encryption method setting. In a case where the terminal apparatus 101 is connected to the predetermined AP at the point in time when the instruction to display the first network setting screen is received from the user, the predetermined application acquires information about an SSID and encryption method of the predetermined AP at that point in time from the OS. Accordingly, in a case where the terminal apparatus 101 is connected to the predetermined AP at the point in time when the screen 700 is displayed, the SSID of the predetermined AP is displayed in the SSID input box 702, and the encryption method set on the predetermined AP is displayed in the pull-down list 703 for selecting an encryption method. In a case where the terminal apparatus 101 is not connected to the predetermined AP at the point in time when the screen 700 is displayed, the SSID input box 702 and the pull-down list 703 for selecting an encryption method are blank. In the present embodiment, the predetermined AP is the AP to which the terminal apparatus 101 is connected when a process that triggers the start of the flowchart in Fig. 4 is performed.

Further, in a case where the direct connection is selected in the region 701 for selecting a connection method by the user, the SSID input box 702 and the pull-down list 703 for selecting an encryption method are displayed in a grayed-out state to prevent a user operation from being received. While the SSID input box 702 for inputting an SSID for a wireless LAN connection is configured to receive a character string input by the user via a keyboard in the present embodiment, a list of SSIDs of APs detected by the predetermined application or the communication apparatus 151 may be displayed to allow selection. Further, the pull-down list 703 for selecting an encryption method displays options of no encryption, WEP, WPA/WPA2, WPA2/WPA3, and WPA3 from which the user can select. While the drop-down list is used to receive the selection in the present embodiment, an encryption method set for an SSID input in the input box for inputting an SSID for a wireless LAN connection may be set automatically. The region 704 for setting an IP address is an input box for setting IPv4 or IPv6, and the predetermined application receives the IPv4 or IPv6 setting from the user via the region 704 for setting an IP address. Since the screen 700 illustrated in Fig. 7 is an example of a screen displayed when the IPv4 setting is selected by the user, a region for setting an IPv4 address is displayed in the region 704 for setting an IP address. In a case where the IPv6 setting is selected by the user in the region 704 for setting an IP address, the region is switched to display a region for setting an IPv6 address. The predetermined application displays the information about the IP address of the communication apparatus 151, which is acquired in a case where the instruction to display the first network setting screen is received from the user, in the region 704 at the point in time when the first network setting screen is displayed.

In a case where the Set button 705 is pressed by the user, the processing proceeds to step S416. In a case where the Cancel button 706 is pressed by the user, the predetermined application closes the screen 700 and displays the screen 500.

In step S416, the predetermined application transmits the setting information set on the first network setting screen 700 to the communication apparatus 151. In other words, at least one of the information for establishing a connection to the AP identified as a connection target for the communication apparatus 151 and the IP address setting information is transmitted to the communication apparatus 151. Specifically, the information includes the connection method selected in the region 701, the SSID of the AP input in the SSID input box 702, the encryption method selected from the pull-down list 703, and the IP address setting information set in the region 704. In a case where the AP identified as a connection target for the communication apparatus 151 is the predetermined AP, the predetermined application transmits the information for establishing a connection to the predetermined AP to the communication apparatus 151 without receiving input of a password for the predetermined AP from the user. On the other hand, in a case where the AP identified as a connection target for the communication apparatus 151 is another AP different from the predetermined AP, the predetermined application receives input of a password for the other AP from the user. Then, in a case where the password for the other AP is input by the user, the predetermined application performs a pre-connection setting process. The pre-connection setting process will be described. The predetermined application establishes a connection to the other AP using setting information including the SSID and password for the other AP, which is the AP identified as a connection target for the communication apparatus 151. In a case where a connection is established between the other AP and the terminal apparatus 101 by the pre-connection setting process, the predetermined application determines that the password for the other AP input by the user is correct. Consequently, the terminal apparatus 101 disconnects the connection to the other AP and re-establishes a connection to the communication apparatus 151. Then, the predetermined application transmits information for establishing a connection to the other AP (such as the SSID and password for the AP) to the communication apparatus 151.

After the setting information for establishing a connection to the predetermined AP or the other AP is transmitted to the communication apparatus 151, the communication apparatus 151 terminates the connection setting mode and establishes a connection to the AP identified as a connection target for the communication apparatus 151 using the received information. As the connection setting mode is terminated, the connection between the communication apparatus 151 and the terminal apparatus 101 is disconnected. Then, the terminal apparatus 101 re-establishes a connection to the predetermined AP using the information about the predetermined AP acquired at the point in time when the instruction to display the first network setting screen is received from the user. Thereafter, the processing proceeds to step S417.

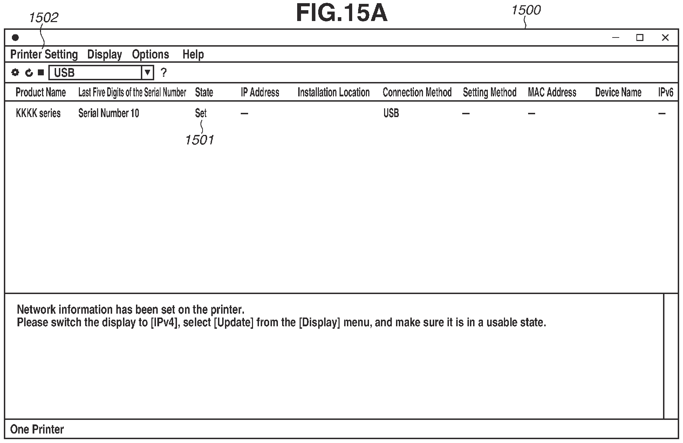

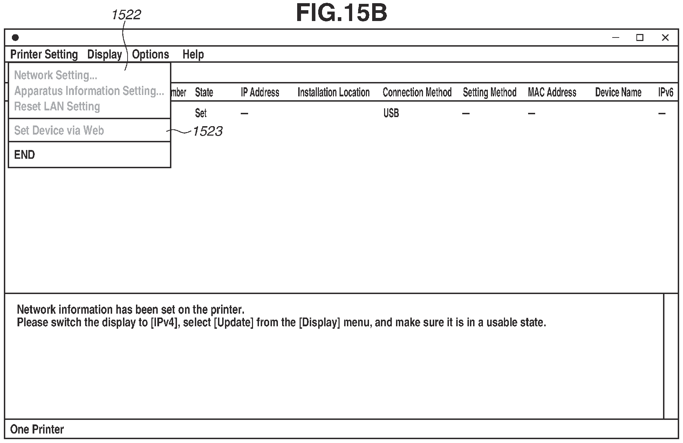

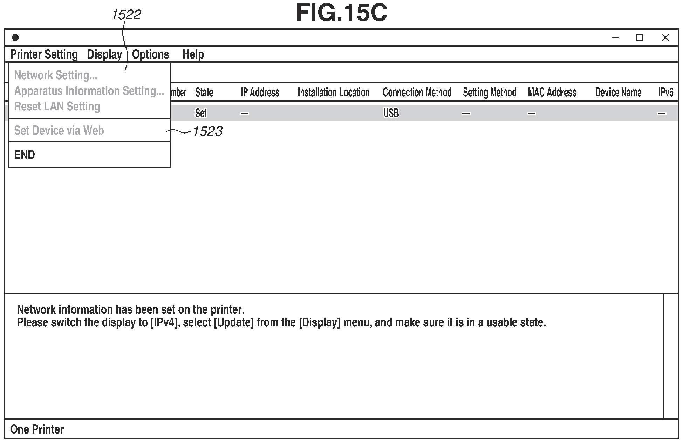

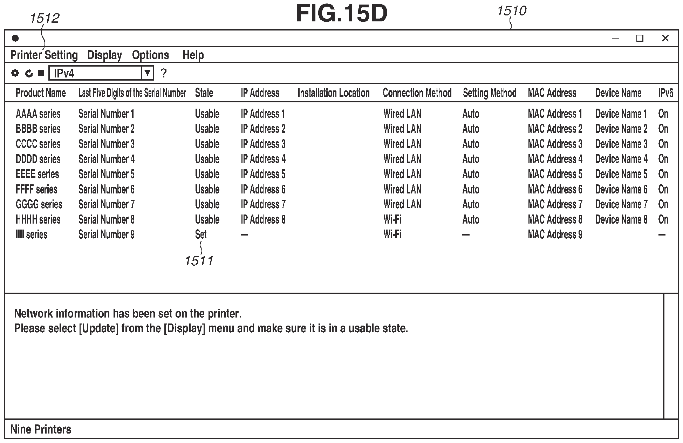

In step S417, the predetermined application changes the state of the communication apparatus detected as a communication apparatus that is in the connection setting mode and the state of the communication apparatus that is in the USB connection state to "Set", and the processing proceeds to step S404. Figs. 15A and 15D illustrate examples of screens displayed during step S404 performed in a case where step S417 is performed. A screen 1500 in Fig. 15A is an example of a communication apparatus list screen displayed in a case where network setting information is transmitted to a communication apparatus that is in the USB connection state in the process. In a case where a menu 1502 is operated by the user, the predetermined application displays a Network Setting button 1522 and a Set Device via Web button 1523. Fig. 15B illustrates an example of a screen displayed by the predetermined application in a case where the menu 1502 related to communication apparatus settings is operated by the user. In a case where the menu 1502 is operated by the user in a state where no communication apparatus in the region 1501 is selected, the buttons 1522 and 1523 are both displayed in a grayed-out state. The buttons 1522 and 1523 are both displayed in a grayed-out state in a case where the menu 1502 is operated by the user in a state where any of the communication apparatuses displayed in the region 1501 is selected in step S411 as illustrated in Fig. 15C.

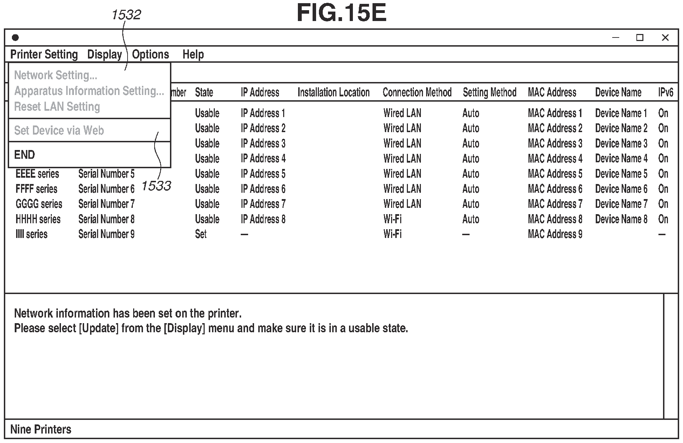

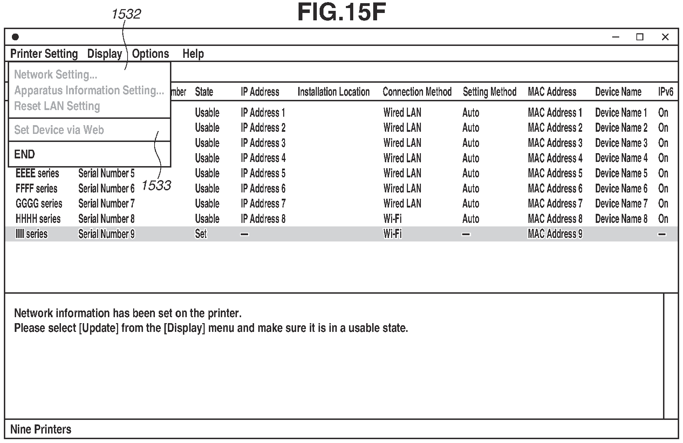

Next, Fig. 15D illustrates an example of a communication apparatus list screen displayed in a case where network setting information is transmitted to a communication apparatus that is in the connection setting mode as a setting target in the process. A screen 1510 in Fig. 15D is a communication apparatus list screen displayed in a case where network setting information is transmitted to a communication apparatus that is in the connection setting mode. In a case where a menu 1512 is operated by the user, the predetermined application displays a Network Setting button 1532 and a Set Device via Web button 1533. Fig. 15E illustrates an example of a screen displayed by the predetermined application in a case where the menu 1512 related to communication apparatus settings is operated by the user. Like the buttons 511 and 512, the buttons 1532 and 1533 are both displayed in a grayed-out state in a case where the menu 1512 is operated by the user in a state where no communication apparatus in a region 1511 is selected. The buttons 1532 and 1533 are both displayed in a grayed-out state in a case where the menu 1512 is operated by the user in a state where a communication apparatus displayed in the region 1511 is selected in step S411 as illustrated in Fig. 15F.

In the region 533 of the screen 530 displayed in a case where a communication apparatus that is in the USB connection state is identified as a search target, the state of the communication apparatus that is in the USB connection state is blank, whereas in the region 1501 of the screen 1500, "Set" is displayed in the state of the communication apparatus that is in the USB connection state. Further, the screen 1510 is a communication apparatus list screen displayed in a case where the network setting of the communication apparatus that is in the connection setting mode is complete. In the region 503 of the screen 500 displayed in a case where a communication apparatus that is in the infrastructure connection state is identified, the state of the communication apparatus that is in the connection setting mode is "Settable", whereas in the region 1511 of the screen 1510, "Set" is displayed in the state of the communication apparatus that is in the connection setting mode.

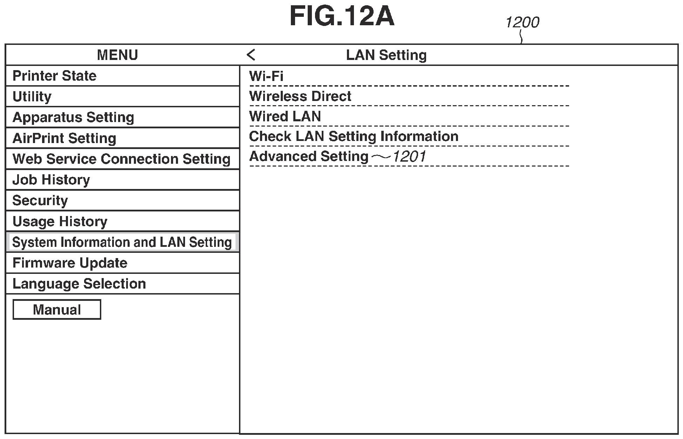

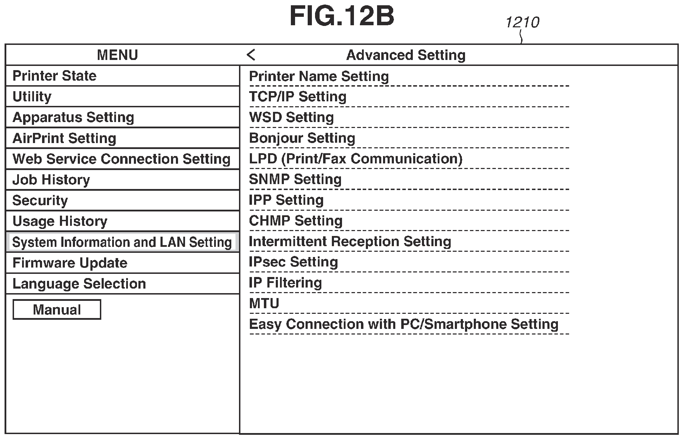

In step S418, which is performed in a case where it is determined that the Set Device via Web button is operated in step S412, the predetermined application displays a remote UI screen. Figs. 12A and 12B illustrate examples of screens displayed in the process. The remote UI screen includes a function capable of verifying information other than the network setting, such as an ink level and job history of the communication apparatus 151, in addition to the IP address setting of the communication apparatus 151. Fig. 12A illustrates a screen displayed in the process. A screen 1200 is a screen for executing the network setting of the communication apparatus on the remote UI screen displayed in a case where the Set Device via Web button is operated. The screen 1200 includes an Advanced Setting button 1201 for the network setting. The Advanced Setting button 1201 is a button for receiving a setting of the communication apparatus, such as a Transmission Control Protocol (TCP)/Internet Protocol (IP) setting or Web Services for Devices (WSD) setting. In a case where the button 1201 is operated by the user, a screen 1210 illustrated in Fig. 12B is displayed. Then, in a case where a TCP/IP setting button included in the screen 1210 is operated by the user, the IP address setting is executed. As described above, in the present embodiment, in a case where a setting that requires administrator password authentication is performed on the main body of the communication apparatus, the user is required to provide the administrator password for authentication when logging in to remote UI screen of the communication apparatus. This ensures that the remote UI screen is operated by the user with knowledge of the administrator password, so that the predetermined application provides guidance to enable execution of the network setting from the remote UI screen.

In step S419, the processing returns to step S404.

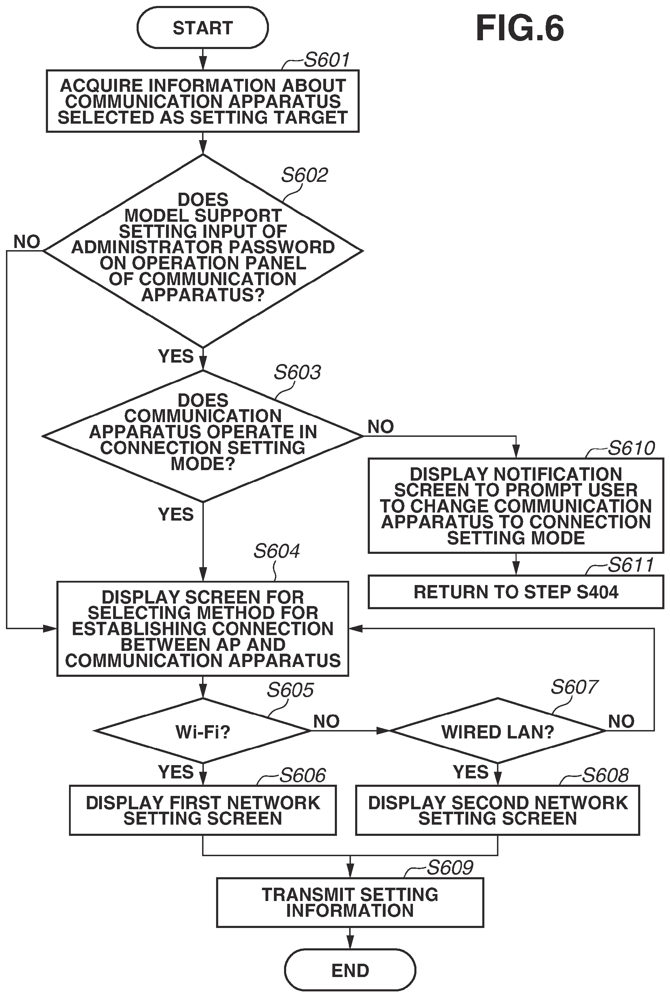

Fig. 6 is a flowchart illustrating an example of a process performed by the terminal apparatus 101 using the predetermined application in the present embodiment. Each process in the flowchart in Fig. 6 is realized, for example, by the CPU 103 loading the predetermined application stored in a memory, such as the ROM 104, into the RAM 105 and executing the predetermined application. The process in the flowchart corresponds to step S414.

In step S601, the predetermined application acquires information about the communication apparatus selected as a setting target. Specifically, in a case where the Network Setting button is operated by the user in a state where a communication apparatus that is in the USB connection state is selected in step S406, the predetermined application acquires information about the communication apparatus that is in the USB connection state and identified as a network setting target. The information about the communication apparatus acquired in the process includes administrator password setting information and operation mode information. The administrator password setting information is, for example, information indicating whether the communication apparatus is a model that supports setting the operation panel as the scope of the administrator password. A model of the communication apparatus that does not support setting the operation panel as the scope of the administrator password corresponds to a model that includes no operation panel or a model that disables administrator password authentication. Further, the operation mode information is, for example, information indicating whether the communication apparatus is in the connection setting mode. In the present embodiment, the predetermined application generates an SNMP packet for acquiring information about the communication apparatus selected as a setting target. The SNMP packet includes information about the communication apparatus selected as a setting target as destination designation information, and the predetermined application instructs the OS to transmit the SNMP packet to the communication apparatus selected as a setting target. In response, the OS acquires information about the communication apparatus selected as a setting target via USB using the SNMP packet.

In step S602, the predetermined application determines whether the model of the communication apparatus selected as a setting target is a model that supports setting input of the administrator password on the operation panel of the communication apparatus, based on the administrator password setting information acquired in step S601.

A model that supports setting input of the administrator password on the operation panel of the communication apparatus is, for example, a model that includes an operation panel. On the other hand, a model that does not support setting input of the administrator password on the operation panel of the communication apparatus is, for example, a model that includes no operation panel. In a case where the predetermined application determines yes (YES in step S602), the processing proceeds to step S603. In a case where the predetermined application determines no (NO in step S602), the processing proceeds to step S604 without performing step S603.

In step S603, the predetermined application performs a process for determining whether the administrator password is input to the communication apparatus selected as a setting target by the user.

In other words, this process is a mode that determines whether the communication apparatus selected as a setting target operates in a mode configured to be enabled in a case where the administrator password is input to the communication apparatus by the user. In the present embodiment, the mode that is enabled in a case where the administrator password is input to the communication apparatus by the user is, for example, the connection setting mode. Accordingly, as the process, specifically, the predetermined application determines whether the communication apparatus selected as a setting target operates in the connection setting mode based on the operation mode information acquired in step S601 in the present embodiment. While it is determined whether the communication apparatus selected as a setting target operates in the connection setting mode in the process, this is not intended to be limiting. Specifically, the communication apparatus may include a specific mode different from the connection setting mode as the mode that is enabled in a case where the administrator password is input by the user. Then, the predetermined application may determine whether the communication apparatus selected as a setting target is in the specific mode different from the connection setting mode. In a case where the predetermined application determines no in step S602, the processing proceeds to step S604 without performing the process, as described above. This is due to the fact that a communication apparatus for which administrator password authentication cannot be set does not require input of the administrator password to the communication apparatus to start operating in the connection setting mode. In a case where the predetermined application determines yes (YES in step S603), the processing proceeds to step S604. In a case where the predetermined application determines no (NO in step S603), the processing proceeds to step S610.

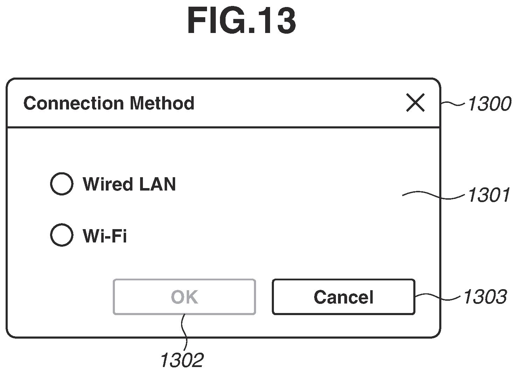

In step S604, the predetermined application displays a screen for selecting a method for establishing a connection between the communication apparatus selected as a setting target and the AP. Fig. 13 illustrates an example of the screen displayed in the process. A screen 1300 for selecting a connection method includes a region 1301 for selecting a connection method, an OK button 1302, and a Cancel button 1303. In the region 1301, "Wired LAN" and "Wi-Fi" are displayed. "Wired LAN" is an example of an indication that the method for establishing a connection between the communication apparatus selected as a setting target and the AP is wired LAN, and "Wi-Fi" is an example of an indication that the method for establishing a connection between the communication apparatus selected as a setting target and the AP is wireless LAN. In a case where the OK button 1302 is operated in a state where a connection method is selected in the region 1301, the screen 1300 is closed, and the processing proceeds to step S605. In a case where the Cancel button 1303 is operated, the screen 530 is displayed.

In step S605, the predetermined application determines whether Wi-Fi is selected as the method for establishing a connection between the communication apparatus selected as a setting target and the AP. In a case where the predetermined application determines yes (YES in step S605), the processing proceeds to step S606. In a case where the predetermined application determines no (NO in step S605), the processing proceeds to step S607. In the process, "Wi-Fi" is displayed as an example of text indicating that the method for establishing a connection between the communication apparatus and the AP is wireless LAN, and "Wired" is displayed as an example of text indicating that the method for establishing a connection between the communication apparatus and the AP is wired LAN. While the present embodiment assumes a communication apparatus that supports both wireless LAN and wired LAN, this is not intended to be limiting. Specifically, in a case where the predetermined application determines that the communication apparatus only supports wireless LAN or wired LAN by acquiring communication interface information supported by the communication apparatus, it is not required to display the screen 1300 for selecting a connection method.

In step S606, the predetermined application displays the first network setting screen. Fig. 7 illustrates an example of the screen displayed in the process. Since details of Fig. 7 are described above in step S415, a description thereof is omitted. In the process, the predetermined application displays the same network setting screen as the network setting screen displayed in a case where a communication apparatus that is in the connection setting mode is identified as a setting target, and the SSID and encryption method of the AP connected to the communication apparatus and the IP address setting information about the communication apparatus are designated on the screen.

In step S607, which is performed in a case where the result of the determination is no in step S605, the predetermined application determines whether wired LAN is selected as the method for establishing a connection between the communication apparatus selected as a setting target and the AP.

In a case where the predetermined application determines yes (YES in step S607), the processing proceeds to step S608. In a case where the predetermined application determines no (NO in step S607), the processing proceeds to step S604, and the screen 1300 for selecting a connection method is displayed.

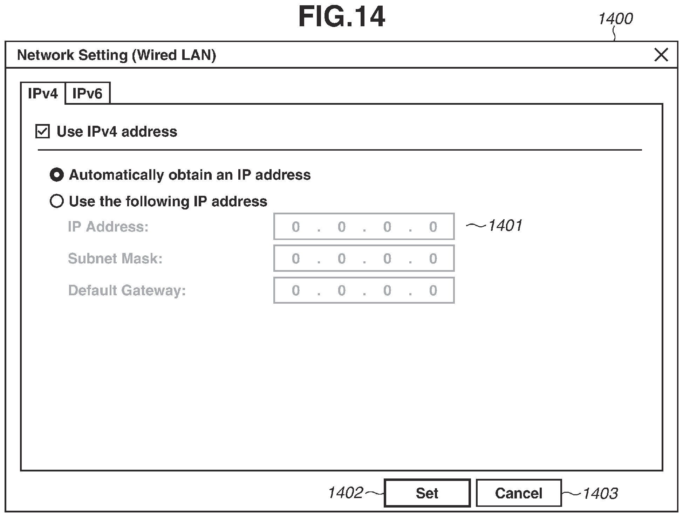

In step S608, the predetermined application displays a second network setting screen. Fig. 14 illustrates an example of the screen displayed in the process. A second network setting screen 1400 includes a region 1401 for setting an IP address, a Set button 1402, and a Cancel button 1403. The region 1401 for setting an IP address is similar to the region 704 for setting an IP address, so that a description thereof is omitted. Unlike the first network setting screen, the second network setting screen only displays a region for setting an IP address and does not display a region for selecting a connection method, an SSID input box, or a button for selecting an encryption method. In a case where the Cancel button 1403 is operated by the user, the screen 530 is displayed. In a case where the Set button 1402 is operated by the user, the processing proceeds to step S609.

In step S609, the predetermined application transmits setting information to the communication apparatus 151. Specifically, the predetermined application transmits setting information set on the first network setting screen 700 or the second network setting screen 1400 to the communication apparatus via USB. In a case where the setting information transmitted to the communication apparatus 151 is setting information set on the first network setting screen 700, the setting information includes, specifically, a connection method selected in the region 701, an SSID of the AP input in the SSID input box 702, an encryption method selected from the pull-down list 703, and IP address setting information set in the region 704. Further, in a case where the setting information transmitted to the communication apparatus 151 is setting information set on the second network setting screen 1400, the setting information includes, specifically, IP address setting information set in the region 1401. In a case where the AP identified as a connection target for the communication apparatus 151 is the predetermined AP, the predetermined application transmits information for establishing a connection to the predetermined AP to the communication apparatus 151 without receiving input of a password from the user. On the other hand, in a case where the AP identified as a connection target for the communication apparatus 151 is another AP different from the predetermined AP, the predetermined application receives input of a password for the other AP from the user. Then, in a case where the password for the other AP is input by the user, the predetermined application performs a pre-connection setting process. Since details of the pre-connection setting process are described above in step S416, a description thereof is omitted. In a case where a connection is established between the other AP and the terminal apparatus 101 by the pre-connection setting process, the predetermined application transmits, to the communication apparatus 151, information for establishing a connection to the other AP via USB.

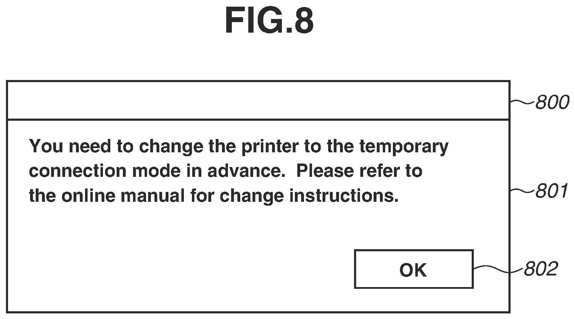

In step S610, which is performed in a case where the result of the determination is no in step S603, the predetermined application displays a notification screen for providing a notification so that the communication apparatus 151 operates in the connection setting mode. The notification screen is specifically a notification screen that prompts the user to change the communication apparatus 151 to the connection setting mode. Fig. 8 illustrates an example of the screen displayed in the process. A notification screen 800 includes a region 801 for prompting the user to change the communication apparatus 151 to the connection setting mode and an OK button 802. The region 801 includes, for example, text for prompting the user to change the communication apparatus 151 to the connection setting mode and text prompting the user to refer to an online manual describing a method for changing to the connection setting mode. The notification screen 800 may display an operation method for changing the communication apparatus 151 to the connection setting mode. In an embodiment in which the communication apparatus 151 includes an administrator password authenticated operation mode, the notification screen 800 may notify the user of an online manual or text describing a method for changing to the administrator password authenticated operation mode.

In a case where the OK button 802 is operated, the processing proceeds to step S611.

As described above, an operation on the main body of the communication apparatus 151 is required for the communication apparatus 151 to start operating in the connection setting mode. Further, the connection setting mode is a mode in which the operation stops automatically in a case where a predetermined time has passed since enablement of the connection setting mode. Accordingly, the user is required to promptly execute the network setting process from the terminal apparatus 101 after changing the communication apparatus 151 to the connection setting mode by an operation on the main body of the communication apparatus 151. This ensures that the user executing the network setting process from the terminal apparatus 101 is likely to be near the communication apparatus 151. Furthermore, in a case where the communication apparatus 151 is configured to include the operation panel in the scope of the administrator password, the connection setting mode corresponds to a mode configured to be enabled in a case where the administrator password is input to the communication apparatus 151 by the user. This ensures that the user having input the administrator password to the communication apparatus 151 is likely to execute the network setting process from the terminal apparatus 101. This makes it possible to execute the network setting of the communication apparatus 151 with enhanced security using administrator password authentication of the communication apparatus 151. While the predetermined application displays the notification screen for providing a notification to cause the communication apparatus 151 to operate in the connection setting mode in the process, this is not intended to be limiting. In other words, the predetermined application may perform control by performing a process other than displaying the notification screen for providing a notification to cause the communication apparatus 151 to operate in the connection setting mode so that the network setting process for the communication apparatus 151 that is not in the connection setting mode is not executed.

In step S611, the processing returns to step S404, and the predetermined application waits until an operation is received.

The order of the determinations in steps S605 and S607 by the predetermined application is not particularly limited in the present embodiment, and steps S605 and S607 may be performed in any order. Further, while the process for determining the method for establishing a connection between the AP and the communication apparatus is performed as in steps S605 and S607, this is not intended to be limiting. In other words, the predetermined application may acquire information indicating whether the model supports setting wired LAN from the communication apparatus at a point in time before step S604 is performed, and in a case where it is determined that the model does not support setting wired LAN, the processing may proceed to step S606 without performing the determination process.

In the present embodiment, the predetermined application provides a notification for changing to the connection setting mode in a case where the communication apparatus 151 does not operate in the connection setting mode, and the user performs a specific operation on the operation panel of the communication apparatus 151. Further, in a case where the administrator password is set for the operation panel of the communication apparatus 151, the user inputs the administrator password on the operation panel. In other words, the predetermined application provides a notification for changing the communication apparatus 151 to the connection setting mode, thereby making it possible to execute the network setting of the communication apparatus 151 while ensuring security. Further, the predetermined application displays the Network Setting button in a grayed-out state in a case where the setting target is a communication apparatus that is in the infrastructure connection state to prevent a user operation from being received. This enables the predetermined application to prevent the network setting process from being performed for the communication apparatus that is in the infrastructure connection state, and prevent the connection between the communication apparatus 151 and the AP from being disconnected.

The connection setting mode is a mode that requires the specific operation on the operation panel of the communication apparatus, thereby ensuring that the predetermined user operating the communication apparatus 151 is likely to execute the network setting process from the terminal apparatus 101. Furthermore, the user is required to input the administrator password to perform the specific operation on the communication apparatus configured to include the operation panel in the scope of the administrator password. In other words, the present embodiment further ensures that the predetermined user is likely to execute the network setting process for the communication apparatus IIII series, which is a communication apparatus that is in the connection setting mode, from the terminal apparatus 101 in a case where administrator password authentication is executed by the predetermined user.

### Other Embodiments

While a connection between the communication apparatus 151 operating in the connection setting mode and the terminal apparatus 101 is established via Wi-Fi in the above-described embodiment, this is not intended to be limiting. A communication method other than Wi-Fi, such as Bluetooth Classic or Bluetooth Low Energy, may be used to establish a connection between the communication apparatus 151 operating in the connection setting mode and the terminal apparatus 101. In this case, the terminal apparatus 101 may maintain a Wi-Fi connection to the predetermined AP while establishing a connection between the communication apparatus 151 operating in the connection setting mode and the terminal apparatus 101. In other words, in the configuration in which a connection between the communication apparatus 151 operating in the connection setting mode and the terminal apparatus 101 is established via Wi-Fi, the predetermined AP is the AP to which the terminal apparatus 101 is connected at the time of performing the process that triggers the start of the flowchart in Fig. 4, but is not connected at the time of transmitting information about the predetermined AP to the communication apparatus 151. On the other hand, in the configuration in which a connection between the communication apparatus 151 operating in the connection setting mode and the terminal apparatus 101 is established using a communication method other than Wi-Fi, the predetermined AP is the AP to which the terminal apparatus 101 is connected at the time of performing the process that triggers the start of the flowchart in Fig. 4 and also at the time of transmitting information about the predetermined AP to the communication apparatus 151. Accordingly, the predetermined AP can also be described as an AP to which the terminal apparatus 101 is connected at least at the time of performing the process that triggers the start of the flowchart in Fig. 4.

While the predetermined application performs the network setting process illustrated in Fig. 6 in a case where a connection between the terminal apparatus 101 and the communication apparatus 151 is established via the USB cable in the present embodiment, this is not intended to be limiting. Specifically, for example, the predetermined application may perform the network setting process also in a case where a connection between the terminal apparatus 101 and the communication apparatus 151 is established via Bluetooth Low Energy.

Further, while the predetermined application disables a user operation on the Network Setting button in a case where the communication apparatus 151 is a communication apparatus that is in the infrastructure connection state in the above-described embodiment, a user operation on the Network Setting button may be enabled. In other words, the predetermined application may receive a network setting of a communication apparatus that is in the infrastructure connection state from the user. Specifically, in a case where the Network Setting button is operated in a state where the communication apparatus 151 in the infrastructure connection state is selected as a setting target, the predetermined application determines whether the communication apparatus 151 is in the connection setting mode. Then, in a case where the communication apparatus 151 is not in the connection setting mode, the predetermined application displays the notification screen illustrated in Fig. 8. While the notification screen is displayed, the predetermined application searches for an SSID of an AP enabled in a case where the communication apparatus 151 starts operating in the connection setting mode. Then, in a case where an SSID of the communication apparatus 151 operating in the connection setting mode is detected by the search, the predetermined application closes the notification screen, displays the screen 500, and displays text indicating that the communication apparatus 151 is settable. Then, in a case where the Network Setting button is operated in a state where the communication apparatus 151 is selected, the predetermined application may determine whether the communication apparatus 151 is in the connection setting mode, and in a case where the communication apparatus 151 is in the connection setting mode, steps S604 to S609 may be performed.

Further, the disclosure of the present embodiment includes the following configurations.

### Item 1

A predetermined application program configured to connect to a communication apparatus configured to operate in a predetermined mode configured to be enabled in a case where an administrator password is input by a user, the predetermined application program causing a computer of an information processing apparatus to acquire, as a first acquisition, first information being information indicating an operation mode of the communication apparatus, and to control the information processing apparatus so that in a case where the acquired first information indicates that the communication apparatus is not in the predetermined mode, the information processing apparatus does not perform a first transmission process in which network setting information about the communication apparatus is transmitted to the communication apparatus via a predetermined connection different from a connection established in a case where the communication apparatus operates in the predetermined mode, and in a case where the acquired first information indicates that the communication apparatus is in the predetermined mode, the information processing apparatus is allowed to perform the first transmission process.

### Item 2

The program according to Item 1, further causing the computer to acquire, as a second acquisition, second information different from the first information, the second information indicating whether the communication apparatus is a communication apparatus that supports setting input of the administrator password on an operation panel of the communication apparatus.

### Item 3

The program according to Item 1 or 2, further causing the computer to determine whether a connection between the information processing apparatus and the communication apparatus is the predetermined connection, and in a case where the second information indicates that the communication apparatus is not a communication apparatus that supports setting the input of the administrator password, the first transmission process is performed without performing the determination.

### Item 4

The program according to Item 1, further causing the computer to display a notification screen for providing a notification to cause the communication apparatus to operate in the predetermined mode in a case where the acquired first information indicates that the communication apparatus is not in the predetermined mode.

### Item 5

The program according to Item 4, wherein the notification screen includes text prompting the user to change the communication apparatus to the predetermined mode. Item 6

The program according to Item 4 or 5, wherein the notification screen includes text prompting the user to refer to a manual for changing the communication apparatus to the predetermined mode.

### Item 7

The program according to any one of Items 1 to 6, wherein a process for controlling the information processing apparatus so that the information processing apparatus is allowed to perform the first transmission process is a process for displaying a network setting screen configured to receive input related to the network setting information from the user, and a process for controlling the information processing apparatus so that the information processing apparatus does not perform the first transmission process is a process for performing control so that the network setting screen is not displayed.

### Item 8

The program according to Item 7, wherein the network setting information is information including at least one of information for establishing a connection between the communication apparatus and an external access point and IP address setting information about the communication apparatus, the external access point being an access point external to the information processing apparatus.

### Item 9

The program according to any one of Items 1 to 8, further causing the computer to perform a second transmission process for transmitting the network setting information about the communication apparatus to the communication apparatus using another application program different from the predetermined application program in a case where a connection to the communication apparatus is established using a predetermined connection method, wherein the predetermined connection method is a connection using a wired LAN or a wireless LAN, and wherein in the second transmission process, the other application program displays a remote UI screen of the communication apparatus.

### Item 10

The program according to Item 9, wherein in the second transmission process, in a case where the administrator password is input by the user on the remote UI screen, a predetermined operation for transmitting the network setting information to the communication apparatus is received on the remote UI screen.

### Item 11

The program according to Item 9 or 10, wherein in the second transmission process, in a case where the communication apparatus is set to disable the input of the administrator password by the user, control is performed so that the administrator password is not input. Item 12

The program according to any one of Items 9 to 11, wherein the remote UI screen is displayed using a web browser.

### Item 13

The program according to any one of Items 1 to 12, wherein the predetermined mode is a mode that is enabled in a case where a predetermined operation is performed by the user on the operation panel of the communication apparatus.

### Item 14

The program according to any one of Items 1 to 12, wherein the predetermined mode is a mode that is disabled in a case where a predetermined time has passed since enablement of the predetermined mode.

### Item 15

The program according to any one of Items 1 to 14, wherein in a case where the communication apparatus is set to disable the input of the administrator password by the user, the predetermined mode is enabled without the input of the administrator password. Item 16

The program according to any one of Items 1 to 15, wherein the information indicating the operation mode of the communication apparatus is information acquired from the communication apparatus using the Simple Network Management Protocol (SNMP).

### Item 17

The program according to any one of Items 1 to 16, wherein the information indicating the operation mode of the communication apparatus is information managed by an internal management information base (MIB) of the communication apparatus.

### Item 18

The program according to any one of Items 1 to 17, wherein the predetermined connection is a connection between the information processing apparatus and the communication apparatus via a USB cable.

### Item 19

The program according to any one of Items 1 to 18, wherein the predetermined connection is a connection between the information processing apparatus and the communication apparatus via Bluetooth Low Energy.

### Item 20

The program according to any one of Items 1 to 19, wherein the predetermined mode is a mode in which an internal access point is enabled, the internal access point being an access point internal to the communication apparatus.

### Item 21

The program according to Item 20, wherein the connection established in a case where the communication apparatus operates in the predetermined mode is a connection via the internal access point.

### Item 22

The program according to any one of Items 1 to 21, further causing the computer to perform a second transmission to transmit at least one of a print job configured to cause the communication apparatus to print and a scan job configured to cause the communication apparatus to scan.

### Item 23

The program according to any one of Items 1 to 22, wherein the connection between the information processing apparatus and the communication apparatus that is used in the first transmission process is a connection based on a communication method based on the IEEE 802.11 standard.

### Item 24

A method for controlling an information processing apparatus including a predetermined application program configured to connect to a communication apparatus configured to operate in a predetermined mode configured to be enabled in a case where an administrator password is input by a user, the method including acquiring, as a first acquisition, first information being information indicating an operation mode of the communication apparatus, and controlling the information processing apparatus so that in a case where the acquired first information indicates that the communication apparatus is not in the predetermined mode, the information processing apparatus does not perform a first transmission process in which network setting information about the communication apparatus is transmitted to the communication apparatus via a predetermined connection different from a connection established in a case where the communication apparatus operates in the predetermined mode, and in a case where the acquired first information indicates that the communication apparatus is in the predetermined mode, the information processing apparatus is allowed to perform the first transmission process.

### Item 25

An information processing apparatus including a predetermined application program configured to connect to a communication apparatus configured to operate in a predetermined mode configured to be enabled in a case where an administrator password is input by a user, the information processing apparatus including a first acquisition unit configured to acquire first information being information indicating an operation mode of the communication apparatus and a control unit configured to control the information processing apparatus so that in a case where the acquired first information indicates that the communication apparatus is not in the predetermined mode, the information processing apparatus does not perform a first transmission process in which network setting information about the communication apparatus is transmitted to the communication apparatus via a predetermined connection different from a connection established in a case where the communication apparatus operates in the predetermined mode, and in a case where the acquired first information indicates that the communication apparatus is in the predetermined mode, the information processing apparatus is allowed to perform the first transmission process.

The present disclosure makes it possible to improve the usability of an application program that performs a process for transmitting information for establishing a connection to an access point and network setting information, such as IP address setting information, to a communication apparatus.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A program, which is a predetermined application program, for causing a computer of an information processing apparatus (101) configured to communicate with a communication apparatus (151) configured to operate in a predetermined mode that is enabled in a case where an administrator password is input by a user to execute a process comprising:
acquiring, as a first acquisition, first information via a predetermined connection between the communication apparatus and the information processing apparatus, the first information being information indicating an operation mode of the communication apparatus; and
executing, as a first execution, a first process to perform control so that in a case where the first information acquired via the predetermined connection indicates that the communication apparatus is in the predetermined mode, network setting information about the communication apparatus is transmitted to the communication apparatus via the predetermined connection.

2. The program according to claim 1, further causing the computer to execute, as a second execution, a second process to perform control so that in a case where the first information indicating that the communication apparatus is in the predetermined mode is not acquired, the first process is not executed.

3. The program according to claim 2, wherein the second process includes performing control so that a notification screen for providing a notification to cause the communication apparatus to operate in the predetermined mode is displayed.

4. The program according to claim 3, wherein the notification screen includes at least one of text prompting the user to change the communication apparatus to the predetermined mode and text prompting the user to refer to a manual for changing the communication apparatus to the predetermined mode.

5. The program according to any one of claims 2 to 4, wherein the first process includes a process for performing control so that a network setting screen for receiving input related to the network setting information from the user is displayed, and the second process includes a process for performing control so that the network setting screen is not displayed.

6. The program according to claim 5, wherein the network setting information includes at least one of a service set identifier, SSID, of an external access point and a password for the external access point, the external access point being an access point external to the information processing apparatus and the communication apparatus.

7. The program according to any one of claims 1 to 6, further causing the computer to execute, as a third execution, a third process to perform control so that in a case where another connection different from the predetermined connection is used to establish a connection between the communication apparatus and the information processing apparatus, the network setting information about the communication apparatus is transmitted to the communication apparatus by another application program different from the predetermined application program.

8. The program according to claim 7, wherein the predetermined connection is a connection via a universal serial bus, USB, cable,
wherein the another connection is a connection via a wired local area network, wired LAN, or a wireless local area network, wireless LAN,
wherein in the third process, the another application program displays a remote user interface, remote UI, screen corresponding to the communication apparatus, and
wherein in a case where an operation is performed by the user on the remote UI screen, setting of the network setting information on the communication apparatus is performed.

9. The program according to any one of claims 1 to 8, wherein the predetermined mode is a mode in which an access point internal to the communication apparatus is enabled in a case where a predetermined operation is performed by the user on the communication apparatus.

10. The program according to any one of claims 1 to 9, wherein the predetermined connection is a connection via a USB cable.

11. The program according to any one of claims 1 to 10, wherein the predetermined connection is a connection via Bluetooth^{®} Low Energy.

12. The program according to any one of claims 1 to 11, further causing the computer to execute, as a second acquisition, acquiring second information indicating whether the communication apparatus connected to the information processing apparatus via the predetermined connection is a communication apparatus to which the administrator password is able to be input,
wherein in a case where the second information acquired by the second acquisition indicates that the communication apparatus connected to the information processing apparatus via the predetermined connection is not a communication apparatus to which the administrator password is able to be input, the first process is executed even in a case where the first information indicating that the communication apparatus is in the predetermined mode is not acquired.

13. The program according to any one of claims 1 to 12, further causing the computer to execute transmission control so that at least one of a print job for causing the communication apparatus to print and a scan job for causing the communication apparatus to scan is transmitted.

14. A method for controlling an information processing apparatus including a predetermined application and configured to communicate with a communication apparatus configured to operate in a predetermined mode that is enabled in a case where an administrator password is input by a user, the method comprising:
acquiring, as a first acquisition, first information via a predetermined connection between the communication apparatus and the information processing apparatus, the first information being information indicating an operation mode of the communication apparatus; and
executing, as a first execution, a first process to perform control so that in a case where the first information acquired via the predetermined connection indicates that the communication apparatus is in the predetermined mode, network setting information about the communication apparatus is transmitted to the communication apparatus via the predetermined connection.

15. An information processing apparatus (101) including a predetermined application and configured to communicate with a communication apparatus (151) configured to operate in a predetermined mode that is enabled in a case where an administrator password is input by a user, the information processing apparatus comprising:
first acquisition means (303) for acquiring first information via a predetermined connection between the communication apparatus and the information processing apparatus, the first information being information indicating an operation mode of the communication apparatus; and
first execution means (305) for executing a first process to perform control so that in a case where the first information acquired via the predetermined connection indicates that the communication apparatus is in the predetermined mode, network setting information about the communication apparatus is transmitted to the communication apparatus via the predetermined connection.
